# EUROPÄISCHE PATENTANMELDUNG

(11) **EP 4 803 570 A1**
(43) Veröffentlichungstag der Anmeldung: **09.09.2026**
(21) Anmeldenummer: 26162643.6
(22) Anmeldetag: 05.03.2026
(51) Int. Cl.: C08K 5/3465, C08K 5/526, C08K 5/5313, C08L 67/02

(54) **FLAMMGESCHÜTZTE KUNSTSTOFFPRODUKTE**

(30) Priorität: 06.03.2025 EP 25161996
(71) Anmelder: LANXESS Deutschland GmbH, 50569 Köln (DE)
(72) Erfinder: MAY, Lars, 40764 Langenfeld (DE); WAMBACH, Wolfgang, 51065 Köln (DE)

(57) **Zusammenfassung**

Die vorliegende Erfindung betrifft flammgeschützte Kunststoffprodukte aus Polyester basierten Formmassen enthaltend als Flammschutzmittel wenigstens ein Phosphinsäuresalz und/oder wenigstens ein Diphosphinsäuresalz, wenigstens einen Flammschutzmittel-Synergist und wenigstens ein Farbmittel enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on, die zur Herstellung dieser Kunststoffprodukte erforderlichen Formmassen, sowie die Verwendung des erfindungsgemäß einzusetzenden Farbmittels zur Herstellung flammgeschützter Polyester basierter Formmassen bzw. Kunststoffprodukte mit hoher Lasertransparenz.

## Beschreibung

Die vorliegende Erfindung betrifft flammgeschützte Kunststoffprodukte aus Polyester basierten Formmassen enthaltend als Flammschutzmittel wenigstens ein Phosphinsäuresalz und/oder wenigstens ein Diphosphinsäuresalz, wenigstens einen Flammschutzmittel-Synergist und wenigstens ein Farbmittel enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on, die zur Herstellung dieser Kunststoffprodukte erforderlichen Formmassen, sowie die Verwendung des erfindungsgemäß einzusetzenden Farbmittels zur Herstellung flammgeschützter Polyester basierter Formmassen bzw. Kunststoffprodukte mit hoher Lasertransparenz.

### Stand der Technik

Polyester sind aufgrund ihrer guten mechanischen Stabilität, ihrer chemischen Beständigkeit, den der guten Verarbeitbarkeit ein wichtiger Werkstoff zum Beispiel für den Einsatz in Kraftfahrzeugen, in Bauteilen für die Elektro- und Elektronikindustrie oder in Haushaltsgeräten. Bei Anwendungen der Polyester in der Nähe von stromführenden Teilen werden dabei häufig flammwidrig ausgestattete Materialien eingesetzt, um so der Gefahr einer Brandentstehung, ausgelöst durch überhitzte Drähte oder Kontakte, entgegenzuwirken. Je nach Anwendungsgebiet sind dabei nicht nur eine gute Selbstverlöschungseigenschaft, insbesondere eine UL94 V-0 Klassifizierung gemäß Underwriters Laboratories Inc. Standard of Safety, "Test for Flammability of Plastic Materials for Parts in Devices and Appliances", S. 14 - 18 Northbrook 1998**,** sondern auch eine geringe Entzündbarkeit erwünscht.

Dabei werden im Bereich der Polyester in jüngster Zeit zunehmend halogenfreie Lösungen eingefordert, was neben ökologischen Gründen auch daran liegt, dass halogenfrei flammgeschützte Polyester gegenüber halogenhaltigen Systemen in der Regel nicht nur die Entflammbarkeit von Gegenständen verringern und dadurch die Entstehung von Bränden verzögern, sondern zudem die Rauchentwicklung reduzieren, toxische Gase verhindern und gleichzeitig umwelt- und gesundheitsverträglich sind.Der Wunsch nach maximaler Designfreiheit und damit höherer Komplexität der Bauteilgeometrie verlangt in Verbindung mit der kostengetriebenen Notwendigkeit nach automatisierbaren und gut integrierbaren Serienfertigungsprozessen zunehmend nach Werkstoffen, die sich zudem nach dem Verfahren des Laserdurchstrahlschweißens miteinander fügen lassen; siehe: E. Haberstroh, W.-M. Hoffmann, Laserdurchstrahlschweißen von Kunststoffen - Elastomere und Kunststoffe, KGK-Rubberpoint, 11.2006, S. 590 - 595**.** Für einen lasertransparenten Fügepartner erfordert dies einen hohen Transmissionsgrad bei der anzuwendenden Laserwellenlänge. Letzteres ist bei flammgeschützten Polyestern eine große Herausforderung, da Flammschutzmittel das Laserlicht streuen oder sogar absorbieren, wie dies beispielsweise bei dem als Flammschutzmittel-Synergist in halogenhaltigen Flammschutzmitteln gebräuchlichen Antimontrioxid der Fall ist. Eine zusätzliche Herausforderung ist bei farbigen Polyestern dann noch das eingesetzte Farbmittel.

WO 2009/066232 A1 beschreibt NIR-absorbierende Formmassen, die in Laserschweißprozessen eingesetzt werden können. Verschiedene Pigmente werden zur Reduktion der NIR-Transmission bei Kunststoffen, u.a. in Polyester, eingesetzt, u.a. auch Ti0₂ Pigmente mit mittleren Partikelgrößen von 30 nm bis 4,35 µm. Lasertransparente Formmassen werden in WO 2009/066232 A1 nicht speziell beschrieben.

Aufgrund hoher Verarbeitungstemperaturen von teilweise >300°C, insbesondere in der Compoundierung und im Spritzguss, aber auch die Gegenwart von Additiven, insbesondere von Flammschutzmitteln, schränkt die Auswahl geeigneter Farbmittel in Polyestern, insbesondere zur orangen Kennzeichnung wesentlicher Bauteile für den Elektroantrieb, erheblich ein. Die Farbe Orange zur Kennzeichnung von elektrischer Ausrüstung von Maschinen ist in **VDE 0113-1** "Sicherheit von Maschinen - Elektrische Ausrüstung von Maschinen - Teil 1: Allgemeine Anforderungen", Abschn. 13.2.4 geregelt, wobei Orange nur für "ausgenommene Stromkreise" nach Abschn. 5.3.5 verwendet werden soll. Die Norm **CEI EN 60204-1:2006** (CEI 44-5 "Sicherheit von Maschinen - Elektrische Ausrüstung von Maschinen") legt fest, dass Orange für Stromkreise, deren Versorgung nicht durch eine Trennvorrichtung unterbrochen werden kann, verwendet wird. Orange hat sich deshalb zur Kennzeichnung wesentlicher Bauteile für den Elektroantrieb durchgesetzt.

Zu berücksichtigen ist zudem, dass Farbstoffe in Polyestern unter Extremanforderungen, wie sie insbesondere bei der Verarbeitung von Polyestern auftreten, zu Farbschlieren, insbesondere auf den Oberflächen spritzgegossener Erzeugnisse nahe der Einspritzpunkte, oder zu Verfärbungen neigen.

Bekannt ist dem Fachmann beim Einsatz organischer, im Polymer löslicher Farbstoffe, beispielsweise aus EP 0 035 672 B1 im Falle von Isoindolinfarbstoffen, das Phänomen des Verbräunens, was auf thermische Schädigung des Farbstoffs zurückzuführen ist.

Unerwünschte Farbschlieren treten hingegen auf, wenn das Farbmittel ungenügend eingemischt wurde, wenn Farbmittel und zu verarbeitender Kunststoff miteinander unverträglich sind, oder es zu einer Entmischung aufgrund zu hoher Scherung während des Spritzgießens kommt. Fehlerquellen für das Auftreten solch unerwünschter Farbschlieren gibt es zahlreiche. Genannt seien hier beispielsweise maschinenbedingte Fehlerquellen an der Mischschnecke, zu kleiner Mischzylinder, defekte Farbdosierung, zu großer Materialtrichter oder eine elektrostatische Aufladung der Farbe bzw. des Farbmittels. Materialbedingte Fehlerquellen können die Unverträglichkeit von Masterbatch oder Farbmittel mit dem zu verarbeitenden Kunststoff, ungenügende Löslichkeit des Farbmittels im zu verarbeitenden Kunststoff, thermische Empfindlichkeit des Farbmittels, zu große Granulate oder zu hoher Pigmentanteil sein. Methodisch bedingte Fehlerquellen können zu niedriger Staudruck während des Spritzgießens, zu hohe Schneckendrehzahl, zu hohe oder zu niedrige Massetemperatur, zu hohe oder zu niedrige Einspritzgeschwindigkeit, zu hohe oder zu niedrige Werkzeugtemperatur, oder unzureichende bzw. zu hohe Farbdosierung sein. Schließlich können auch Werkzeug bedingte Fehlerquellen das Auftreten von Farbschlieren begünstigen wie zu kleine Fließquerschnitte, zu lange Fließwege, ungünstige Lage von Bindenähten oder für den Spritzguss zu kleine Abschnitte am Spritzgusserzeugnis. Insbesondere im Falle glasfaserverstärkter Spritzgusserzeugnisse ist deshalb die schlierenreduzierte, wenn nicht sogar die schlierenfreie Verarbeitung oranger Polyester basierter Formmassen, insbesondere im Spritzguss, für den Fachmann eine besondere Herausforderung.

Aus EP 3 421 540 A1 sind Polyester basierte Harzzusammensetzungen bekannt, die mit den Anthrachinonfarbstoffen Solvent Blue 104, Solvent Blue 97 und Solvent Yellow 163, mit dem Perinonfarbstoff Solvent Red 179 und dem Azomethinfarbstoff Solvent Brown 53 schwarz eingefärbt, mit einer Nigrosin enthaltenden zweiten Polyesterkomponente zu einem insgesamt optisch schwarz erscheinenden Probekörper verschweißt wurden. Zwar wird in EP 3 421 540 A1 mit Solvent Red 179 ein Perinonfarbstoff eingesetzt, jedoch betrifft EP 3 421 540 A1 weder die Lasertransparenz oranger Polyester, noch die Problematik der Präsenz von Flammschutzmitteln. Abgesehen davon, dass die Aufgabe in EP 3 421 540 A1 darin bestand, zwei schwarz erscheinende Komponenten miteinander zu verschweißen, um ein optisch einheitlich erscheinendes Erzeugnis herzustellen, wird die Problematik des Verbräunens durch Wärmeeinwirkung auf den Polyester und/oder auf den Farbstoff, sei es beim Laserschweißen oder in der Compoundierung, in EP 3 421 540 A1 nicht betrachtet.

WO 2020/187704 A1 offenbart Hochvoltkomponenten basierend auf Polymerzusammensetzungen enthaltend wenigstens einen Polyester und 10,10'-Oxy-bis-12H-phthaloperin-12-on.

WO 2025/003531 A1 beschreibt schließlich Elektromobilitatskomponenten mit einem Farbabstand ΔE <20 von den L*a*b* Koordinaten zu einer mit "2" beginnenden Farbnummer der RAL-Farbtabelle enthaltend Polymerzusammensetzungen auf Basis wenigstens eines Polyesters und eines Farbmittels mit einer nach ISO 13320 mittels Laserdiffraktometrie zu bestimmenden mittleren Teilchengröße d50 im Bereich von 1 bis 12 µm enthaltend 9,9'-Oxybis-12H-phthaloperin-12-on, 9,10-0xybis-12H-phthalopenn-12-on und 10,10'-Oxybis-12H-phthaloperin-12-on im Verhältnis von 1 1: 0,8-1,5 bis 1: 1,5: 0,8 - 1,5, wobei in den Polymerzusammensetzungen auf 100 Massenanteile Polyester 0,01 bis 5 Massenanteile Farbmittel vorliegen.

Ausgehend vom Stand der Technik bestand die Aufgabe der vorliegenden Erfindung deshalb darin, halogenfrei flammgeschützte Kunststoffprodukte aus Polyester basierten Polymerzusammensetzungen bereitzustellen, die einerseits durch das einzusetzende im Polyester lösliche Farbmittel die Herstellung schlierenfreier, oranger Kunststoffprodukte ohne Verbräunung ermöglicht, gleichzeitig aber auch eine hinreichende Lasertransparenz aufweisen, um auch in nachgelagerten Laser basierten Verarbeitungsverfahren verarbeitet werden zu können, ohne Verschlechterung gegenüber den UL 94 Resultaten einer nicht orange eingefärbten Probe bei ansonsten derselben Zusammensetzung.

Überraschend wurde nun gefunden, dass Kunststoffprodukte aus Polymerzusammensetzungen enthaltend wenigstens einen Polyester, wenigstens ein Flammschutzmittel aus wenigstens einem Phosphinsäuresalz und/oder wenigstens einem Diphosphinsäuresalz und/oder deren Polymere, wenigstens einen Flammschutzmittel-Synergist und wenigstens ein Farbmittel enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on die geforderten Anforderungen erfüllen.

### Erfindungsgegenstand

Gegenstand der Erfindung sind Kunststoffprodukte aus Polymerzusammensetzungen enthaltend
a) wenigstens einen Polyester,
b) wenigstens ein Flammschutzmittel aus wenigstens einem Phosphinsäuresalz der Formel (I) und/oder wenigstens einem Diphosphinsäuresalz der Formel (II) und/oder deren Polymere, 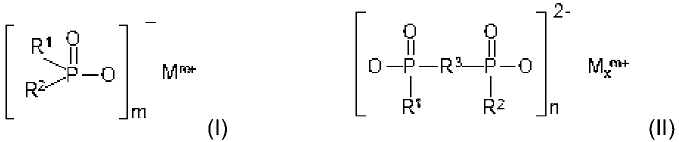 worin
   R¹, R² gleich oder verschieden sind und für ein lineares oder verzweigtes C₁-C₆-Alkyl, und/oder für C₆-C₁₄-Aryl stehen,
   R³ für lineares oder verzweigtes C₁-C₁₀-Alkylen, C₆-C₁₀-Arylen oder für C₁-C₆- Alkyl-C₆-C₁₀-arylen oder C₆-C₁₀-Aryl-C₁-C₆-alkylen steht,
   M für Aluminium oder Zink steht,
   m für eine ganze Zahl von 1 bis 4 steht;
   n für eine ganze Zahl von 1 bis 3 steht,
   x für 1 und 2 steht,
   wobei n, x und m in Formel (II) gleichzeitig nur solche ganzen Zahlen annehmen können, dass das Diphosphinsäuresalz der Formel (II) als Ganzes ungeladen ist,
c) wenigstens einen Flammschutzmittel-Synergist auszuwählen aus Melaminpolyphosphat oder Aluminiumphosphonat und
d) wenigstens ein Farbmittel enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on.

Vorzugsweise betrifft die Erfindung Kunststoffprodukte aus Polymerzusammensetzungen enthaltend
a) wenigstens einen Polyester,
b) wenigstens ein Flammschutzmittel aus wenigstens einem Phosphinsäuresalz der Formel (I) 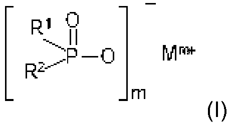 worin
   R¹, R² gleich oder verschieden sind und für ein lineares oder verzweigtes C₁-C₆-Alkyl stehen,
   M für Aluminium oder Zink steht,
   m für eine ganze Zahl von 1 bis 4 steht;
c) wenigstens einen Flammschutzmittel-Synergist auszuwählen aus Melaminpolyphosphat oder Aluminiumphosphonat und
d) wenigstens ein Farbmittel enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on.

Besonders bevorzugt betrifft die Erfindung Kunststoffprodukte mit einem nach **DIN 5033 (1979)** zu bestimmenden Farbabstand ΔE <20 von den L*a*b* Koordinaten zu einer mit "2" beginnenden Farbnummer der RAL-Farbtabelle gemäß Farbmodell nach **EN ISO 11664-4** enthaltend a) wenigstens einen Polyester und die oben genannten Komponenten b) das wenigstens eine Flammschutzmittel, c) den wenigstens einen Flammschutzmittel-Synergist und d) das wenigstens eine Farbmittel.

Ganz besonders bevorzugt betrifft die Erfindung Kunststoffprodukte mit einem nach **DIN 5033 (1979)** zu bestimmenden Farbabstand ΔE <10 von den L*a*b* Koordinaten zu einer mit "2" beginnenden Farbnummer der RAL-Farbtabelle gemäß Farbmodell nach **EN ISO 11664-4** enthaltend a) wenigstens einen Polyester und die oben genannten Komponenten b) das wenigstens eine Flammschutzmittel, c) den wenigstens einen Flammschutzmittel-Synergist und d) das wenigstens eine Farbmittel.

Insbesondere ganz besonders bevorzugt betrifft die Erfindung Kunststoffprodukte mit einem nach **DIN 5033 (1979)** zu bestimmenden Farbabstand ΔE <5 von den L*a*b* Koordinaten zu einer mit "2" beginnenden Farbnummer der RAL-Farbtabelle gemäß Farbmodell nach **EN ISO 11664-4** enthaltend a) wenigstens einen Polyester und die oben genannten Komponenten b) das wenigstens eine Flammschutzmittel, c) den wenigstens einen Flammschutzmittel-Synergist und d) das wenigstens eine Farbmittel.

Vorzugsweise werden auf 100 Massenanteile a) des wenigstens eines Polyesters
2 bis 100 Massenanteile, bevorzugt 5 bis 60 Massenanteile, besonders bevorzugt 7 bis 40 Massenanteile, insbesondere bevorzugt 8 bis 30 Massenanteile b) des wenigstens einen Flammschutzmittels,
0,2 bis 50 Massenanteile, bevorzugt 0,5 bis 40 Massenanteile, besonders bevorzugt 0,75 bis 35 Massenanteile c) des wenigstens einen Flammschutzmittel-Synergist
und 0,01 bis 5 Massenanteile des d) wenigstens eines Farbmittels enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on eingesetzt.

Zur Klarstellung sei angemerkt, dass vom Rahmen der vorliegenden Erfindung alle aufgeführten allgemeinen oder in Vorzugsbereichen genannten Definitionen und Parameter in beliebigen Kombinationen umfasst sind. Dies betrifft insbesondere die obigen Kombinationen der Mengenangaben zu den einzelnen Komponenten in Bezug auf die erfindungsgemäßen Polymerzusammensetzungen und die daraus herzustellenden Kunststoffprodukte, wie auch im Rahmen der vorliegenden Erfindung beanspruchte Verfahren und Verwendungen. Im Rahmen dieser Anmeldung genannte Normen beziehen sich auf die zum Anmeldetag dieser Erfindung geltende Fassung. Sofern nicht anders angegeben handelt es sich bei Prozentangaben um Gewichtsprozente.

### Laserdurchstrahlschweißen

Voraussetzung für die Anwendung des Laserdurchstrahlschweißens als Methode zum Verbinden zweier Kunststoffformteile ist, dass die vom Laser emittierte Strahlung zunächst ein Formteil durchdringt, das für Laserlicht der eingesetzten NIR-Wellenlange ausreichend transparent ist (auch als NIR-transparentes Formteil bezeichnet). Vorzugsweise liegt hierfür die Wellenlänge im Bereich von 800 nm bis 1200 nm. Eine ausreichende Transparenz ist dann gegeben, wenn das erste Formteil zumindest teilweise für NIR-Strahlung durchlässig ist. Dies bewirkt, dass die NIR-Strahlung in ausreichendem Maße auf das zweite Formteil trifft, um eine feste Verbindung der beiden Formteile durch Laserschweißen zu ermöglichen. Vorzugsweise weist das erste Formteil zumindest teilweise eine Transmission für NIR-Strahlung von mindestens 10% auf. Hierbei bedeutet "zumindest teilweise" dass diese angegebene Transmission von mindestens 10% zumindest in dem Bereich, der dem Schweißbereich entspricht, erfüllt wird. Außerhalb dieses Schweißbereiches ist die angegebene Transmission von mindestens 10% nicht erforderlich. Vorzugsweise weist jedoch das gesamte von Laserstrahlung zu durchdringende Formteil eine Transmission von mindestens 10% auf. Die NIR-Strahlung, welche das erste Formteil durchdringt, trifft schließlich auf den Schweißbereich, wo diese in einer dünnen Schicht des zweiten Formteils absorbiert wird, wobei das NIR-absorbierende Formteil das NIR-transparente Formteil kontaktiert. In der dünnen Schicht des zweiten Formteils, die das NIR-Laserlicht absorbiert, wird die Laserenergie in Wärme umgewandelt, die zum Aufschmelzen im Schweißbereich und letztlich in der Verbindung des NIR-transparenten Formteils mit dem NIR-absorbierenden Formteil resultiert. Für das Laserdurchstrahlschweißen werden üblicherweise Laser im Wellenlängenbereich von 800 nm bis 1200 nm eingesetzt. Im Bereich der Wellenlänge der für das Thermoplastschweißen eingesetzten Laser sind Nd:YAG-Laser (1064 nm) oder Hochleistungsdiodenlaser (800- 1000 nm) üblich. Dem Fachmann stehen mehrere Laserschweißverfahrensvarianten zur Verfügung, die alle auf dem Durchstrahlprinzip beruhen. So stellt das Konturschweißen einen sequenziellen Schweißprozess dar, bei dem entweder der Laserstrahl entlang einer frei programmierbaren Nahtkontur geführt, oder das Bauteil relativ zum fest installierten Laser bewegt wird. Beim Simultanschweißen wird die linienförmig emittierte Strahlung einzelner Hochleistungsdioden entlang der zu schweißenden Nahtkontur angeordnet. Das Aufschmelzen und Verschweißen der gesamten Kontur erfolgt somit zeitgleich. Das QuasiSimultanschweißen stellt eine Kombination aus dem Kontur- und dem Simultanschweißen dar. Der Laserstrahl wird mit Hilfe von galvanometrischen Spiegeln (Scannern) mit einer sehr hohen Geschwindigkeit von 10 m/s und mehr entlang der Schweißnahtkontur geführt. Durch die hohe Geschwindigkeit wird der Fügebereich nach und nach erwärmt und aufgeschmolzen. Gegenüber dem Simultanschweißen besteht eine hohe Flexibilität bei Veränderungen der Schweißnahtkontur. Das Maskenschweißen ist ein Verfahren, bei dem ein linienförmiger Laserstrahl quer über die zu fügenden Teile bewegt wird. Durch eine Maske wird die Strahlung gezielt abgeschattet und trifft nur dort, wo geschweißt werden soll, auf die Fügefläche. Das Verfahren erlaubt die Herstellung sehr exakt positionierter Schweißnähte. Diese Verfahren sind dem Fachmann beispielsweise aus dem Handbuch Kunststoff-Verbindungstechnik" (G. W. Ehrenstein, Hanser, ISBN 3-446-22668-0**) und / oder DVS-Richtlinie 2243 "Laserstrahlschweißen thermoplastischer Kunststoffe"** bekannt.

Erfindungsgemäß bevorzugte Varianten des Laserdurchstrahlschweißens sind deshalb das Konturschweißen, das Simultanschweißen, das Quasisimultanschweißen, der TWIST^{®}-Ansatz, das Maskenschweißen, das Radialschweißen, das Globo-Schweißen und das Hybridschweißen.

Auch wenn die NIR-Transparenzen der verschiedenen thermoplastischen Kunststoffe unterschiedlich ausfallen können, so besitzen die gängigen thermoplastischen Kunststoffe im NIR-Bereich doch eine ausreichend hohe Transparenz, so dass Laserschweißprozesse durchführbar sind, wenn geeignete Prozessparameter gewählt werden (Dicke des NIR-transparenten Fügepartners, Intensität des Laserstrahls, Geschwindigkeit des Schweißprozesses, Auswahl geeigneter Additive im thermoplastischen Kunststoff). Aufgrund der geringen NIR-Absorption von Thermoplasten wird der das Laserlicht absorbierende Fügepartner üblicherweise mit einem NIR-absorbierenden Zuschlagstoff ausgerüstet. Dafür eignen sich insbesondere Pigmente, die im Wellenlangenbereich des Schweißlasers eine möglichst hohe Absorption aufweisen. Besonders geeignet und weit verbreitet ist die Nutzung von Rußen jeglicher Art als NIR-absorbierende Pigmente. Daher sind die NIR-absorbierenden Fügepartner zumeist dunkel bis schwarz gefärbt. Sofern der NIR-transparente Fügepartner eine ähnliche Farbe wie der NIR-absorbierende aufweisen soll, ist zu beachten, dass die Einfärbung des NIR-transparenten Fügepartners vor allem in dem für das menschliche Auge wahrnehmbaren Wellenlangenbereich erfolgt (ca. 380 bis 750 nm) und eine möglichst geringe Beeinträchtigung der NIR-Transmission stattfindet. Zum Einfärben von Kunststoffen stehen grundsätzlich zwei Arten von Farbmitteln zur Verfügung: Pigmente und lösliche Farbstoffe (teilweise auch vereinfachend "Farbstoffe" genannt). Die Streuung von NIR-Licht an Farbmitteln lasst sich weitgehend vermeiden, wenn lösliche Farbstoffe eingesetzt werden, da sie sich bis hin zu molekulardispers im Thermoplast verteilen lassen und damit keine Streuquelle für NIR-Licht darstellen. Weiterhin soll die NIR-Absorption der löslichen Farbstoffe möglichst gering sein.

Das im Rahmen der vorliegenden Erfindung zur orangen Kennzeichnung von Polyester basierten Kunststoffprodukten einzusetzende wenigstens eine im Polymer lösliche Farbmittel, das zudem das Erfordernis der Lasertransparenz bzw. die geringe Beeinträchtigung der NIR-Transmission erfüllt, ist das Isomerengemisch in Form von 9,9'-Oxybis-12H-phthaloperin-12-on, 9,10-Oxybis-12H-phthaloperin-12-on und 10,10'-Oxybis-12H-phthaloperin-12-on. 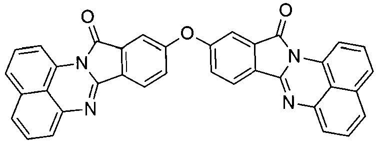
10,10'-Oxybis-12H-phthaloperin-12-on 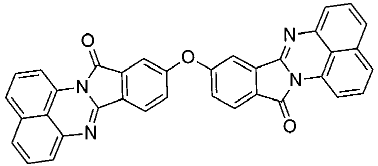
9,10-Oxybis-12H-phthaloperin-12-on 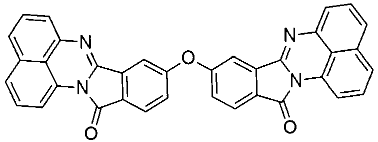
9,9'-Oxybis-12H-phthaloperin-12-on

Das erfindungsgemäß einzusetzende Farbmittel ist vorzugsweise erhältlich nach dem Verfahren gemäß Synthesevorschrift 2 in DE 20 2024 001 709 U1 mit einem Isomerenverhältnis von 9,9'-Oxybis-12H-phthaloperin-12-on, 9,10-Oxybis-12H-phthaloperin-12-on und 10,10'-Oxybis-12H-phthaloperin-12-on im Bereich von 1: 1: 0,8 - 1,5 bis 1: 1,5 : 0,8 - 1,5. Vorzugsweise weist das erfindungsgemäß einzusetzende Farbmittel eine nach **ISO 13320** mittels Laserdiffraktometrie zu bestimmende mittleren Teilchengröße d50 im Bereich von 1 bis 20 µm auf, besonders bevorzugt eine mittlere Teilchengröße d50 im Bereich von 1 bis 10 µm.

Die im Rahmen der vorliegenden Erfindung aus den Experimenten erlangte Erkenntnis, dass das erfindungsgemäß einzusetzende Farbmittel in Polyestern eine hohe NIR-Transmission zeigt, gleichzeitig weder mit dem als Komponente b) einzusetzenden Flammschutzmittel, noch mit dem Flammschutzmittel-Synergist c) interagiert und zudem hohe Verarbeitungstemperaturen übersteht und damit keine Verbräunung zeigt, ermöglicht den Einsatz erfindungsgemäßer, flammgeschützter, oranger Polymerzusammensetzungen und daraus herzustellender zumindest schlierenreduzierter Kunststoffprodukte, vorzugsweise in Anwendungen bei denen Lasertransparenz gefordert ist.

Die Erfindung betrifft deshalb vorzugsweise Polymerzusammensetzungen und Kunststoffprodukte wobei es sich um lasertransparente, orange, flammgeschützte Erzeugnisse oder Fügepartner handelt, insbesondere solche zum Einsatz als Bauteile für den Elektroantrieb von Kraftfahrzeugen, sogenannte Elektromobilitätskomponenten.

Das erfindungsgemäß einzusetzende Farbmittel enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on kann direkt als Pulver, oder aber in Form eines Masterbatches, in Form eines Kompaktes oder in Form eines Konzentrates eingesetzt werden, wobei Masterbatche bevorzugt sind und Masterbatche in einer Polyestermatrix besonders bevorzugt sind.

### Lasertransparenz

Die im Rahmen der vorliegenden Erfindung an Probekörpern zu bestimmende Lasertransparenz orientiert sich an der Tatsache, dass sich auftreffende Strahlung je nach Absorptionsvermögen und Dicke des zu untersuchenden Kunststoffteils in zwei Teile aufteilt, die messtechnisch erfasst werden können.

Unter einer hohen Lasertransmission gilt erfindungsgemäß eine Lasertransmission von mindestens 30%, bevorzugt mindestens 40%, besonders bevorzugt mindestens 50% gemessen an Probeplättchen einer Dicke von 0,75 mm mit dem Transmissionsmessgerat LPKF TMG3 der Firma LPKF Laser 8 Electronics AG, Garbsen, Deutschland bei einer Laserwellenlange von 980 nm. Das Transmissionsmessgerat LPKF TMG3 ist ein zertifiziertes, rückführbar kalibriertes Messinstrument. Seine Messmittelfähigkeit wurde im Rahmen einer statistischen Messsystemanalyse (MSA) nachgewiesen. Das Gerät entspricht zudem den Vorgaben der Automotive-Norm IATF 16949 und ist damit direkt zur normkonformen Qualitätssicherung qualifiziert. Vorzugsweise werden im Rahmen der vorliegenden Erfindung Nd:YAG-Laser (1064 nm) oder Hochleistungsdiodenlaser (800 - 1000 nm) angewandt. Die Messungen im Rahmen der vorliegenden Erfindung erfolgen auf Basis der DVS-Richtlinie 2243 (01/2014) "Laserstrahlschweißen thermoplastischer Kunststoffe" anhand von Rundplatten mit 80 mm Durchmesser und 0,75 mm Dicke im nahen Infrarot (NIR). Das Transmissionsmessgerat LPKF TMG3 der Firma LPKF Laser & Electronics AG wird vor den Messungen mit einem nach **DIN EN ISO/IEC 17025** erzeugten Messnormal kalibriert. Die Messungen erfolgen im Rahmen der vorliegenden Erfindung bei einer Laserwellenlänge von 980 nm.

Eine Reduzierung der Transmission von <3% bei 980 nm im Vergleich zu einer Kunststoffprobe ohne Komponente d) dem Farbmittel in Form des Isomerengemisches von 9,9'-Oxybis-12H-phthaloperin-12-on, 9,10-Oxybis-12H-phthaloperin-12-on und 10,10'-Oxybis-12H-phthaloperin-12-on wird im Rahmen der vorliegenden Erfindung mit +++ bewertet. Eine Reduzierung der Transmission bei 980 nm im Bereich von 3 bis 5% im Vergleich zu einer Kunststoffprobe ohne Komponente d) dem Farbmittel in Form des Isomerengemisches von 9,9'-Oxybis-12H-phthaloperin-12-on, 9,10-Oxybis-12H-phthaloperin-12-on und 10,10'-Oxybis-12H-phthaloperin-12-on wird im Rahmen der vorliegenden Erfindung mit ++ bewertet. Eine Reduzierung der Transmission bei 980 nm im Bereich von 5 bis 10% im Vergleich zu einer Kunststoffprobe ohne Komponente d) dem Farbmittel in Form des Isomerengemisches von 9,9'-Oxybis-12H-phthaloperin-12-on, 9,10-Oxybis-12H-phthaloperin-12-on und 10,10'-Oxybis-12H-phthaloperin-12-on wird im Rahmen der vorliegenden Erfindung nur noch mit + bewertet.

### Compoundierung

Die Zubereitung von Polymerzusammensetzungen zur Herstellung erfindungsgemäßer flammgeschützter Kunststoffprodukte erfolgt mittels Compoundierung und anschließender Verarbeitung im Spritzguss, in der Extrusion, oder durch Blasformen indem der als Edukt einzusetzende wenigstens eine Polyester mit dem b) wenigstens einen Flammschutzmittel, dem c) wenigstens einen Flammschutzmittel-Synergist und dem d) wenigstens einen Farbmittel in Form des Isomerengemisches von 9,9'-Oxybis-12H-phthaloperin-12-on, 9,10-Oxybis-12H-phthaloperin-12-on und 10,10'-Oxybis-12H-phthaloperin-12-on in wenigstens einem Mischwerkzeug im oben angegebenen Verhältnis gemischt wird. Hierdurch werden Polymerzusammensetzungen in Form von Formmassen erhalten, die entweder ausschließlich aus den genannten Komponenten bestehen, oder aber zusätzlich zu diesen Komponenten noch wenigstens eine weitere Komponente enthalten. Bei den erfindungsgemäßen flammgeschützten Kunststoffprodukten handelt es sich demnach vorzugsweise um Spritzguss-, Extrusions-, oder Blasformerzeugnisse, insbesondere um Spritzgusserzeugnisse.

Die Verarbeitung von Polyestern in den genannten Verfahren des Spritzguss, der Extrusions, oder des Blasformens erreicht Temperaturen bis in den Bereich der Schmelzpunkte der einzusetzenden Polyester. Die Schmelzpunkte technisch bedeutender und daher erfindungsgemäß bevorzugter Polyester liegen im Bereich von 220°C für Polybutylenterephthalat, im Bereich von 220 bis 230°C für Polycarbonat und im Bereich von 235 bis 260°C für Polyethylenterephthalat.

Vorzugsweise betrifft die Erfindung Kunststoffprodukte auf Basis wenigstens eines Polyesters, insbesondere Polybutylenterephthalat oder Polycarbonat, die bei einer Massetemperatur im Bereich von 220 bis 270 °C spritzgegossen werden. Vorzugsweise hat bei Spritzguss das Spritzgießwerkzeug eine Werkzeugtemperatur im Bereich von 70 bis 100 °C. Vorzugsweise wird beim Spritzguss des wenigstens einen Polyesters, insbesondere Polybutylenterephthalat oder Polycarbonat, ein Einspritzdruck im Bereich von 60 bis 100 MPa angewandt.

Überraschenderweise ist das erfindungsgemäß einzusetzende Farbmittel in Form des Isomerengemisches von 9,9'-Oxybis-12H-phthaloperin-12-on, 9,10-Oxybis-12H-phthaloperin-12-on und 10,10'-Oxybis-12H-phthaloperin-12-on soweit temperaturstabil, dass es unter den genannten Verarbeitungsverfahren von Polyestern nicht verbräunt.

Mit dem Isomerengemisch von 9,9'-Oxybis-12H-phthaloperin-12-on, 9,10-Oxybis-12H-phthaloperin-12-on und 10,10'-Oxybis-12H-phthaloperin-12-on werden Kunststoffprodukte erzeugt, die einen gemäß **EN ISO 11664-4** zu ermittelnden Farbabstand ΔE<20 zu einer mit "2" beginnenden Farbnummer im L*a*b*-System der RAL Farbtabelle aufweisen.

Erfindungsgemäße, flammgeschützte Kunststoffprodukte sind vorzugsweise durch das Farbmittel enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on orange eingefärbt, wobei Farbtöne, die im RAL-Farbsystem der Farbnummer RAL2001, RAL2003, RAL2004, RAL2007, RAL2008, RAL2009, RAL2010 und RAL2011 entsprechen, besonders bevorzugt sind und die Farbtöne, die im RAL-Farbsystem der Farbnummer RAL 2001, RAL2003, RAL2008, RAL 2010 und RAL2011 entsprechen, ganz besonders bevorzugt sind.

Erfindungsgemäß zulässige "ähnliche Farbtöne" und von der vorliegenden Erfindung umfasst sind solche, deren Farbabstand im L*a*b*-System einen ΔE von <20, bevorzugt ein ΔE <10, besonders bevorzugt ΔE <5 zu einer mit "2" beginnenden Farbnummer der RAL-Farbtabelle aufweisen. Zur Erläuterung des in **EN ISO 11664-4** definierten ΔE siehe beispielsweise **https://de.wikipedia.org/wiki/Delta_E.**

### Orange

Im Rahmen der vorliegenden Erfindung gilt als Orange eine Farbe, die im RAL Farbsystem nach **https://de.wikipedia.org/wiki/RAL-Farbe#Orange** in der RAL Farbtabelle eine Farbnummer hat, die mit einer "2" beginnt. Im Einzelnen unterscheidet man zum Anmeldetag der vorliegenden Erfindung Orangetöne gemäß Tab.1:

**Tab.1**

| | | L* | a* | b* |
|---|---|---|---|---|
| RAL 2000 | Gelborange | 58,20 | 37,30 | 68,68 |
| RAL 2001 | Rotorange | 49,41 | 39,79 | 35,29 |
| RAL 2002 | Blutorange | 47,74 | 47,87 | 33,73 |
| RAL 2003 | Pastellorange | 66,02 | 41.22 | 52,36 |
| RAL 2004 | Reinorange | 56,89 | 50,34 | 49,81 |
| RAL 2005 | Leuchtorange | 72,27 | 87,78 | 82,31 |
| RAL 2007 | Leuchthellorange | 76,86 | 47,87 | 97,63 |
| RAL 2008 | Hellrotorange | 60,33 | 46,91 | 60,52 |
| RAL 2009 | Verkehrsorange | 55,83 | 47,79 | 48,83 |
| RAL 2010 | Signalorange | 55,39 | 40,10 | 42,42 |
| RAL 2011 | Tieforange | 59,24 | 40,86 | 64,50 |
| RAL 2012 | Lachsorange | 57,75 | 40,28 | 30,66 |
| RAL 2013 | Perlorange | 40,73 | 32,14 | 34,92 |

In **Tab.1** sind die geräteunabhängigen CIE L*a*b* Farbwerte für den jeweiligen RAL Wert angegeben: L* steht für die Luminanz, a* beschreibt den Farbort bezüglich der Rot-Grün-Achse und b* beschriebt den Farbort bezüglich der Gelb-Blau-Achse unter Verwendung von D65 Normlicht mit einem 10° Sichtfeld eines Normalbeobachters. Das Farbmodell ist in der **EN ISO 11664-4** "Colorimetry -- Part 4: CIE 1976 L*a*b* Colour space" genormt. Zu L*a*b*-Farbraum (auch: CIELAB) siehe: **https://de.wikipedia.org/wiki/Lab-Farbraum.** Jede Farbe im Farbraum ist durch einen Farbort mit den kartesischen Koordinaten {L*, a*, b*} definiert. Die a*b*-Koordinatenebene wurde in Anwendung der Gegenfarbentheorie konstruiert. Auf der a*-Achse liegen sich Grün und Rot gegenüber, die b*-Achse verläuft zwischen Blau und Gelb. Komplementäre Farbtöne stehen sich jeweils um 180° gegenüber, in ihrer Mitte (dem Koordinatenursprung a*=0, b*=0) liegen alle unbunten Farben.

Die L*-Achse beschreibt die Helligkeit (Luminanz) der Farbe mit Werten von 0 bis 100. In der Darstellung steht diese im Nullpunkt senkrecht auf der a*b*-Ebene. Sie kann auch als Neutralgrauachse bezeichnet werden, denn zwischen den Endpunkten Schwarz (L*=0) und Weiß (L*=100) sind alle unbunten Farben (Grautöne) enthalten. Die a*-Achse beschreibt den Grün- oder Rotanteil einer Farbe, wobei negative Werte für Grün und positive Werte für Rot stehen. Die b*-Achse beschreibt den Blau- oder Gelbanteil einer Farbe, wobei negative Werte für Blau und positive Werte für Gelb stehen. Die a*-Werte reichen von ca. -170 bis +100, die b*-Werte von -100 bis +150, wobei die Maximalwerte nur bei mittlerer Helligkeit bestimmter Farbtöne erreicht werden. Der CIELAB-Farbkörper hat im mittleren Helligkeitsbereich seine größte Ausdehnung, die aber je nach Farbbereich unterschiedlich in Höhe und Größe ist.

### Weitere bevorzugte Ausführungsformen der Erfindung

Vorzugsweise betrifft die Erfindung Kunststoffprodukte die durch einen nach **DIN 5033 (1979)** zu bestimmenden Farbabstand ΔE <20 von den L*a*b* Koordinaten zu einer mit "2" beginnenden Farbnummer der RAL-Farbtabelle gemäß Farbmodell nach **EN ISO 11664-4** gekennzeichnet sind.

Besonders bevorzugt betrifft die Erfindung Kunststoffprodukte die durch einen Farbton, der im RAL-Farbsystem der Farbnummer RAL2001, RAL2003, RAL2004, RAL2007, RAL2008, RAL2009, RAL2010 oder RAL2011 entspricht, gekennzeichnet sind.

Ganz besonders bevorzugt betrifft die Erfindung Kunststoffspritzgussprodukte die durch einen nach **DIN 5033 (1979)** zu bestimmenden Farbabstand ΔE <20 von den L*a*b* Koordinaten zu einer mit "2" beginnenden Farbnummer der RAL-Farbtabelle gemäß Farbmodell nach **EN ISO 11664-4** gekennzeichnet sind.

Insbesondere bevorzugt betrifft die Erfindung Kunststoffspritzgussprodukte die durch einen Farbton, der im RAL-Farbsystem der Farbnummer RAL2001, RAL2003, RAL2004, RAL2007, RAL2008, RAL2009, RAL2010 oder RAL2011 entspricht, gekennzeichnet sind.

In einer bevorzugten Ausführungsform betrifft die Erfindung Kunststoffprodukte mit einem nach **DIN 5033 (1979)** zu bestimmenden Farbabstand ΔE <20 von den L*a*b* Koordinaten zu einer mit "2" beginnenden Farbnummer der RAL-Farbtabelle gemäß Farbmodell nach **EN ISO 11664-4** basierend auf Polymerzusammensetzungen enthaltend zusätzlich zum a) wenigstens einen Polyester, b) dem wenigstens einen Flammschutzmittel, c) dem wenigstens einen Flammschutzmittel-Synergist und d) dem als Farbmittel einzusetzenden Isomerengemisch von 9,9'-Oxybis-12H-phthaloperin-12-on, 9,10-Oxybis-12H-phthaloperin-12-on und 10,10'-Oxybis-12H-phthaloperin-12-on noch e) wenigstens einen **Füll und/oder Verstärkungsstoff.** Bevorzugt wird Komponente e) zu 1 bis 150 Massenanteilen, besonders bevorzugt zu 5 bis 80 Massenanteilen, ganz besonders bevorzugt zu 10 bis 50 Massenanteilen, jeweils bezogen auf 100 Massenanteile Polyester eingesetzt.

In einer weiteren bevorzugten Ausführungsform betrifft die Erfindung Kunststoffprodukte mit einem nach **DIN 5033 (1979)** zu bestimmenden Farbabstand ΔE <20 von den L*a*b* Koordinaten zu einer mit "2" beginnenden Farbnummer der RAL-Farbtabelle gemäß Farbmodell nach **EN ISO 11664-4** basierend auf Polymerzusammensetzungen enthaltend zusätzlich zum a) wenigstens einen Polyester, b) dem wenigstens einen Flammschutzmittel, c) dem wenigstens einen Flammschutzmittel-Synergist und d) dem als Farbmittel einzusetzenden Isomerengemisches von 9,9'-Oxybis-12H-phthaloperin-12-on, 9,10-Oxybis-12H-phthaloperin-12-on und 10,10'-Oxybis-12H-phthaloperin-12-on zusätzlich oder alternativ zur Komponente e) noch eine Komponente f) wenigstens ein **Additiv.** Vorzugsweise wird die Komponente f) zu 0,01 bis 80 Massenanteilen, besonders bevorzugt zu 0,05 bis 50 Massenanteilen, ganz besonders bevorzugt zu 0,1 bis 30 Massenanteilen, jeweils bezogen auf 100 Massenanteile Polyester eingesetzt.

### C₂-C₁₀-Polyalkylenterephthalate als Komponente a) einzusetzende Polyester

Erfindungsgemäß vorzugsweise als Polyester im Rahmen der vorliegenden Erfindung einzusetzende **C₂-C₁₀-Polyalkylenterephthalate** sind Reaktionsprodukte aus einem Alkoholteil mit 2 bis 10 C-Atomen im Alkoholteil und der Terephthalsäure. C₂-C₁₀-Polyalkylenterephthalate sind dem Fachmann bekannt und in der Literatur hinreichend beschrieben. Sie enthalten einen aromatischen Ring in der Hauptkette, der von der Terephthalsäure stammt, und einen aliphatischen Teil, der von einer Dihydroxyverbindung stammt. Der aromatische Ring der Terephthalsäure kann auch substituiert sein. Bevorzugte Substituenten sind Halogene oder C₁-C₄-Alkylgruppen. Bevorzugte Halogene sind Chlor oder Brom. Bevorzugte C₁-C₄-Alkylgruppen sind Methyl-, Ethyl-, n-Propyl- oder n-, i- bzw. t-Butylgruppen.

Bevorzugt einzusetzende C₂-C₁₀-Polyalkylenterephthalate können durch Umsetzung von aromatischen Dicarbonsäuren, deren Estern oder anderen esterbildenden Derivaten mit aliphatischen Dihydroxyverbindungen in dem Fachmann bekannter Weise hergestellt werden.

Im Falle der C₂-C₁₀-Polyalkylenterephthalate kann ein Teil der zu deren Herstellung zu verwendenden Terephthalsäure bis zu 30 mol-% durch 2,6-Naphthalindicarbonsäure oder Isophthalsäure oder deren Mischungen ersetzt werden. Bis zu 70 mol-%, vorzugsweise nicht mehr als 10 mol-%, der Terephthalsäure können durch aliphatische oder cycloaliphatische Dicarbonsäuren wie Adipinsäure, Azelainsäure, Sebacinsäure, Dodecandisäuren oder Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,3-Propandiol, 1,4-Butandiol, 1,6-Hexandiol, 1,4-Hexandiol, 1,4-Cyclohexandiol, 1,4-Cyclohexandimethanol, Neopentylglykol, oder deren Mischungen bevorzugt. Besonders bevorzugte Polyalkylenterephthalate leiten sich von Alkandiolen mit 2 bis 4 C-Atomen ab. Von diesen werden insbesondere Polyethylenterephthalat (PET), Polypropylenterephthalat und Polybutylenterephthalat (PBT) oder deren Mischungen bevorzugt. Weiterhin bevorzugt sind PET und/oder PBT, welche bis zu 1 Gew.-%, vorzugsweise bis zu 0,75 Gew.-% 1,6-Hexandiol und/oder 2-Methyl-1,5-Pentandiol als weitere Monomereinheiten enthalten.

Vorzugsweise weisen erfindungsgemäß als Polyester einzusetzende C₂-C₁₀-Polyalkylenterephthalate eine nach **ISO 1628** zu bestimmende Viskositätszahl m Bereich von 50 bis 220, vorzugsweise im Bereich von 80 bis 160 auf, wobei in einer 0,5 gew.-%igen Lösung in einem Phenol/o-Dichlorbenzolgemisch, Gew.-Verh. 1:1 bei 25°C, gemessen wird.

Erfindungsgemäß als Polyester bevorzugt einzusetzende C₂-C₁₀-Polyalkylenterephthalate weisen vorzugsweise einen Carboxylendgruppengehalt von bis zu 100 mval/kg Polyester, besonders bevorzugt einen Carboxylendgruppengehalt von bis zu 50 mval/kg Polyester und insbesondere bevorzugt einen Carboxylendgruppengehalt von bis zu 40 mval/kg Polyester auf. Derartige C₂-C₄₀-Polyalkylenterephthalate können beispielsweise nach dem Verfahren der DE-A 44 01 055 hergestellt werden. Der Carboxylendgruppengehalt wird üblicherweise durch Titrationsverfahren, insbesondere Potentiometrie, bestimmt.

Insbesondere bevorzugte und als Polyester einzusetzende C₂-C₁₀-Polyalkylenterephthalate werden mit Ti-Katalysatoren hergestellt. Diese weisen nach der Polymerisation vorzugsweise einen restlichen Ti-Gehalt von ≤250 ppm, besonders bevorzugt von <200 ppm, ganz besonders bevorzugt von <150 ppm auf.

Das erfindungsgemäß als C₂-C₁₀-Polyalkylenterephthalat bevorzugt einzusetzende Polybutylenterephthalat (PBT) [CAS Nr. 24968-12-5] wird aus Terephthalsäure oder ihren reaktionsfähigen Derivaten und Butandiol nach bekannten Methoden hergestellt **(**Kunststoff-Handbuch, Bd. VIII, S. 695-743, Karl Hanser Verlag, München 1973**).**

Bevorzugt enthält das als Polyester einzusetzende PBT mindestens 80 Mol-%, vorzugsweise mindestens 90 Mol-%, bezogen auf die Dicarbonsäure, Terephthalsäurereste.

Erfindungsgemäß bevorzugt als Polyester einzusetzendes PBT kann in einer Ausführungsform neben Terephthalsäureresten bis zu 20 Mol-% Reste anderer aromatischer Dicarbonsäuren mit 8 bis 14 C-Atomen oder Reste aliphatischer Dicarbonsäuren mit 4 bis 12 C-Atomen enthalten, insbesondere Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure, Cyclohexandicarbonsäure, 2,5-Furandicarbonsäure.

Erfindungsgemäß bevorzugt als Polyester einzusetzendes PBT kann in einer Ausführungsform neben Butandiol bis zu 20 Mol-% andere aliphatische Diole mit 3 bis 12 C-Atomen oder bis zu 20 Mol -% cycloaliphatische Diole mit 6 bis 21 C-Atomen enthalten, bevorzugt Reste von Propandiol-1,3, 2-Ethylpropandiol-1,3, Neopentylglykol, Pentan-diol-1,5, Hexandiol-1.6, 1,4-Cyclohexandimethanol, 3-Methylpentandiol-2,4, 2-Methylpentandiol-2,4, 2,2,4-Trimethylpentandiol-1,3, 2,2,4-Trimethylpentandiol-1,5, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethylcyclobutan,2,2-bis-(3-ß-hydroxyethoxyphenyl)-propan und 2,2-bis-(4-hydroxypropoxyphenyl)-propan.

Bevorzugt als Polyester einzusetzendes PBT hat eine intrinsische Viskosität nach **EN-ISO 1628/5** im Bereich von 40 bis 170cm³/g, besonders bevorzugt im Bereich von 50 bis 150cm³/g, ganz besonders bevorzugt im Bereich von 65 bis 135cm³/g, jeweils gemessen im Ubbelohde Viskosimeter in Phenol/o-Dichlorbenzol (1:1 Gew.-Teile) bei 25°C. Die intrinsische Viskosität *iV,* auch als Staudinger-Index oder Grenzviskosität bezeichnet, ist nach der Mark-Houwink-Gleichung proportional zur mittleren Molekülmasse und ist die Extrapolation der Viskositätszahl VN für den Fall verschwindender Polymerkonzentrationen. Sie kann aus Messreihen oder durch die Verwendung geeigneter Näherungsverfahren (z. B. Billmeyer) abgeschätzt werden. Die VN [ml/g] erhält man aus der Messung der Lösungsviskosität im Kapillar-Viskosimeter, beispielsweise Ubbelohde-Viskosimeter. Die Lösungsviskosität ist ein Maß für das mittlere Molekulargewicht eines Kunststoffs. Die Bestimmung erfolgt am gelösten Polymer, wobei unterschiedliche Lösungsmittel (m-Kresol, Tetrachlorethan, Phenol, 1,2-Dichlorbenzol, etc.) und Konzentrationen zum Einsatz kommen. Durch die Viskositätszahl VN ist eine Kontrolle der Verarbeitungs- und Gebrauchseigenschaften von Kunststoffen möglich. Eine thermische Beanspruchung des Polymers, Alterungsvorgänge oder das Einwirken von Chemikalien, Bewitterung und Licht können durch vergleichende Messungen untersucht werden. Siehe hierzu auch: **http://de.wikipedia.org/wiki/Viskosimetrie** und **http://de.wikipedia.org/wiki/Mark-Houwink-Gleichung.**

Bevorzugt als Polyester einzusetzendes PBT kann auch im Gemisch mit anderen Polymeren eingesetzt werden. Die Herstellung erfindungsgemäß einzusetzender PBT Blends erfolgt durch Compoundieren. Während einer solchen Compoundierung können zudem übliche Additive, insbesondere Entformungsmittel oder Elastomere in der Schmelze zugemischt werden, wodurch die Eigenschaften der Blends verbessert werden.

Erfindungsgemäß bevorzugt einzusetzendes PBT kann als Pocan^{®} B 1300 von der Envalior Deutschland GmbH, Düsseldorf, bezogen werden.

### Polycarbonat als Komponente a) einzusetzende Polyester

Erfindungsgemäß bevorzugt kann als Polyester auch wenigstens ein Thermoplast aus der Gruppe der Polycarbonate eingesetzt werden.

Erfindungsgemäß bevorzugt einzusetzende Polycarbonate sind solche Homopolycarbonate oder Copolycarbonate auf Basis von Bisphenolen der allgemeinen Formel (III),

HO-Z-OH (III)

worin Z für einen divalenten organischen Rest mit 6 bis 30 C-Atomen steht der eine oder mehrere aromatische Gruppen enthält.

Bevorzugt wird als Polyester wenigstens ein Polycarbonat auf Basis von Bisphenolen der Formel (IIIa) eingesetzt 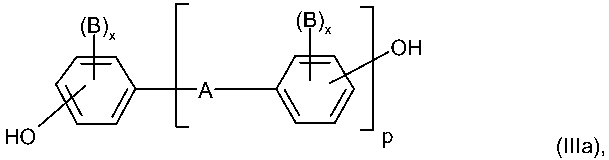 worin
A für eine Einfachbindung oder für einen Rest der Reihe C₁-C₅-Alkylen, C₂-C₅-Alkyliden, C₅-C₆-Cycloalkyliden, -O-, -SO-, -CO-, -S-, -SO₂-, C₆-C₁₂-Arylen steht, woran weitere aromatische, gegebenenfalls Heteroatome enthaltende, Ringe kondensiert sein können,
oder A für einen Rest der Formel (IV) oder (V) steht 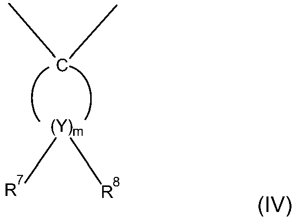 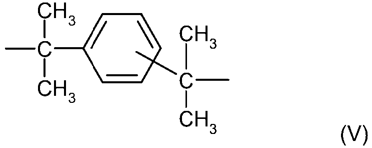 worin
   - R⁷ und R⁸: für jedes Y individuell wählbar sind und unabhängig voneinander für Wasserstoff oder C₁-C₆-Alkyl stehen, vorzugsweise für Wasserstoff, Methyl oder Ethyl stehen,
   - B: jeweils für C₁-C₁₂-Alkyl, vorzugsweise für Methyl, Halogen, vorzugsweise Chlor und/oder Brom, steht,
   - x: jeweils unabhängig voneinander für 0, 1 oder 2 steht,
   - p: für 1 oder 0 steht,
   - Y: für Kohlenstoff steht, und
   - m: für eine ganze Zahl von 4 bis 7 steht, bevorzugt für 4 oder 5 steht, mit der Maßgabe, dass an mindestens einem Y (Kohlenstoffatom) R⁷ und R⁸ gleichzeitig für Alkyl stehen.

In bevorzugter Ausführungsform gilt:
wenn m für 4 steht, steht Y für -CR⁷R⁸-CR⁷R⁸-CR⁷R⁸-CR⁷R⁸-;
wenn m für 5 steht, steht Y für - CR⁷R⁸-CR⁷R⁸-CR⁷R⁸-CR⁷R⁸-CR⁷R⁸-;
wenn m für 6 steht, steht Y für -CR⁷R⁸-CR⁷R⁸-CR⁷R⁸-CR⁷R⁸- CR⁷R⁸-CR⁷R⁸-; und
wenn m für 7 steht, steht Y für -CR⁷R⁸-CR⁷R⁸- CR⁷R⁸-CR⁷R⁸-CR⁷R⁸- CR⁷R⁸-CR⁷R⁸-.

Bevorzugte Bisphenole enthaltend die allgemeine Formel (IV) sind Bisphenole aus der Gruppe Dihydroxydiphenyle, Bis-(hydroxyphenyl)-alkane, Bis-(hydroxyphenyl)-cyclo-alkane, Indanbisphenole, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide und α,α'-Bis-(hydroxyphenyl)-diisopropylbenzole.

Auch Derivate der genannten Bisphenole, die vorzugsweise durch Alkylierung oder Halogenierung an den aromatischen Ringen der genannten Bisphenole erhältlich sind, sind bevorzugt einzusetzende Bisphenole enthaltend die allgemeinen Formel (IV).

Besonders bevorzugte Bisphenole enthaltend die allgemeine Formel (IV) sind Hydrochinon, Resorcin, 4,4'-Dihydroxydiphenyl, Bis-(4-hydroxyphenyl)sulfid, Bis-(4-hydroxyphenyl)sulfon, Bis-(3,5-dimethyl-4-hydroxyphenyl)-methan, Bis-(3,5-dimethyl-4-hydroxyphenyl)-sulfon, 1,1-Bis-(3,5-dimethyl-4-hydroxyphenyl)-p/m-diisopropylbenzol, 1,1-Bis-(4-hydroxyphenyl)-1-phenyl-ethan, 1,1-Bis-(3,5-dimethyl-4-hydroxyphenyl)-cyclohexan, 1,1-Bis-(4-hydroxyphenyl)-3-methylcyclohexan, 1,1-Bis-(4-hydroxyphenyl)-3,3-dimethylcyclohexan, 1,1-Bis-(4-hydroxyphenyl)-4-methylcyclohexan. 1,1-Bis-(4-hydroxyphenyl)-cyclohexan, 1,1-Bis-(4-hydroxyphenyl)-3,3,5-trimethylcyclohexan, 2,2-Bis-(3,5-dichlor-4-hydroxyphenyl)-propan, 2,2-Bis-(3-methyl-4-hydroxyphenyl)-propan, 2,2-Bis-(3,5-dimethyl-4-hydroxyphenyl)-propan, 2,2-Bis-(4-hydroxyphenyl)-propan (d.h. Bisphenol A), 2,2-Bis-(3-chlor-4-hydroxyphenyl)-propan, 2,2-Bis-(3,5-dibrom-4-hydroxyphenyl)-propan, 2,4-Bis-(4-hydroxyphenyl)-2-methylbutan, 2,4-Bis-(3,5-dimethyl-4-hydroxyphenyl)-2-methylbutan, α,α'-Bis-(4-hydroxyphenyl)-o-diisopropylbenzol, α,α'-Bis-(4-hydroxyphenyl)-m-diisopropylbenzol (d. h. Bisphenol M), α,α'-Bis-(4-hydroxyphenyl)-p-diiso-propylbenzol und Indanbisphenol.

Die beschriebenen Bisphenole gemäß der allgemeinen Formel (IV) können nach dem Fachmann bekannten Verfahren, vorzugsweise aus den entsprechenden Phenolen und Ketonen, hergestellt werden.

Auch die als Polyester einzusetzenden Polycarbonate können nach bekannten Verfahren hergestellt werden. Bevorzugte Verfahren zur Herstellung von Polycarbonaten sind zum Beispiel die Herstellung aus Bisphenolen mit Phosgen nach dem Phasengrenzflächenverfahren, oder aus Bisphenolen mit Phosgen nach dem Verfahren in homogener Phase, dem sogenannten Pyridinverfahren, oder aus Bisphenolen mit Kohlensäureestern nach dem Schmelzeumesterungsverfahren. Die genannten Bisphenole und Verfahren zu ihrer Herstellung sind zum Beispiel beschrieben in der Monographie H. Schnell, "Chemistry and Physics of Polycarbonates", Polymer Reviews, Band 9, S. 77-98, Interscience Publishers, New York, London, Sidney, 1964 und in US-A 3 028 635**,** in US-A 3 062 781**,** in US-A 2 999 835**,** in US-A 3 148 172**,** in US-A 2 991 273**,** in US-A 3 271 367**,** in US-A 4 982 014**,** in US-A 2 999 846**,** in DE-A 1 570 703**,** in DE-A 2 063 050**,** in DE-A 2 036 052**,** in DE-A 2 211 956**,** in DE-A 3 832 396**,** und in FR-A 1 561 518 sowie in den Japanischen Offenlegungsschriften mit den Anmeldenummern JP-A 62039 1986**,** JP-A 62040 1986 und JP-A 105550 1986**.**

1,1-Bis-(4-hydroxyphenyl)-3,3,5-trimethylcyclohexan und seine Herstellung ist z. B. beschrieben in US-A 4 982 014**.**

Indanbisphenole und ihre Herstellung sind zum Beispiel beschrieben in US-A 3 288 864**,** in JP-A 60 035 150 und in US-A 4 334 106**.** Indanbisphenole können zum Beispiel aus Isopropenylphenol oder dessen Derivaten oder aus Dimeren des Isopropenylphenols oder dessen Derivaten in Gegenwart eines Friedel-Craft-Katalysators in organischen Lösungsmitteln hergestellt werden.

Das Schmelzeumesterungsverfahren ist beschrieben in H. Schnell, "Chemistry and Physics of Polycarbonates", Polymer Reviews, Band 9, S. 44 bis 51, Interscience Publishers, New York, London, Sidney, 1964 sowie in DE-A 1 031 512**.**

Bei der Herstellung von Polycarbonat werden bevorzugt Rohstoffe und Hilfsstoffe mit einem geringen Grad an Verunreinigungen eingesetzt. Insbesondere bei der Herstellung nach dem Schmelzeumesterungsverfahren sollen die eingesetzten Bisphenole und die eingesetzten Kohlensäurederivate möglichst frei von Alkaliionen und Erdalkaliionen sein. Derart reine Rohstoffe sind zum Beispiel erhältlich, indem man die Kohlensäurederivate, insbesondere Kohlensäureester, und die Bisphenole umkristallisiert, wäscht oder destilliert.

Erfindungsgemäß bevorzugt als Polyester einzusetzende Polycarbonate weisen vorzugsweise ein Gewichtsmittel der molaren Masse M_{w} im Bereich von 10 000 bis 200 000 g/mol auf, welches sich durch Ultrazentrifugation (siehe K. Schilling, Analytische Ultrazentrifugation, Nanolytics GmbH, Dallgow, Seiten 1-15**)** oder Streulichtmessung gemäß **DIN EN ISO 16014-5:2012-10** bestimmen lässt. Besonders bevorzugt weisen die einzusetzenden Polycarbonate ein Gewichtsmittel der molaren Masse im Bereich von 12.000 bis 80.000 g/mol, insbesondere bevorzugt ein Gewichtsmittel der molaren Masse im Bereich von 20.000 bis 35.000 g/mol.

Die mittlere molare Masse erfindungsgemäß bevorzugt als Polyester einzusetzender Polycarbonate kann vorzugsweise in bekannter Weise durch eine entsprechende Menge an Kettenabbrechern eingestellt werden. Die Kettenabbrecher können einzeln oder als Mischung verschiedener Kettenabbrecher eingesetzt werden.

Bevorzugte Kettenabbrecher sind sowohl Monophenole als auch Monocarbonsäuren. Bevorzugte Monophenole sind Phenol, p-Chlorphenol, p-tert.-Butylphenol, Cumylphenol oder 2,4,6-Tribromphenol, sowie langkettige Alkylphenole, insbesondere 4-(1,1,3,3-Tetramethylbutyl)-phenol oder Monoalkylphenole bzw. Dialkylphenole mit insgesamt 8 bis 20 C-Atomen in den Alkylsubstituenten, insbesondere 3,5-di-tert.-Butylphenol, p-tert.-Octylphenol, p-Dodecylphenol, 2-(3,5-Dimethyl-heptyl)-phenol oder 4-(3,5-Dimethyl-heptyl)-phenol. Bevorzugte Monocarbonsäuren sind Benzoesäure, Alkylbenzoesäuren oder Halogenbenzoesäuren.

Besonders bevorzugte Kettenabbrecher sind Phenol, p-tert.-Butylphenol, 4-(1,1,3,3-Tetramethylbutyl)-phenol oder Cumylphenol.

Die Menge einzusetzender Kettenabbrecher liegt bevorzugt im Bereich von 0,25 bis 10 Mol-%, bezogen auf die Summe der jeweils eingesetzten Bisphenole.

Erfindungsgemäß bevorzugt als Polyester einzusetzende Polycarbonate können in bekannter Weise verzweigt sein, vorzugsweise durch den Einbau von trifunktionellen oder mehr als trifunktionellen Verzweigern. Bevorzugte Verzweiger sind solche mit drei oder mehr als drei phenolischen Gruppen oder solche mit drei oder mehr als drei Carbonsäuregruppen.

Besonders bevorzugte Verzweiger sind Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tris-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-terephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methylbenzol, 2,4-Dihydroxybenzoesäure, Trimesinsäure, Cyanurchlorid, 3,3-Bis-(3-methyl-4-hydroxyphenyl)-2-oxo-2,3-dihydroindol, Trimesinsäuretrichlorid oder α,α',α"-Tris-(4-hydroxyphenol)-1,3,5-triisopropylbenzol.

Ganz besonders bevorzugte Verzweiger sind 1,1,1-Tris-(4-hydroxyphenyl)-ethan oder 3,3-Bis-(3-methyl-4-hydroxyphenyl)-2-oxo-2,3-dihydroindol.

Die Menge einzusetzender Verzweiger liegt vorzugsweise im Bereich von 0,05 Mol-% bis 2 Mol-%, bezogen auf die Mole eingesetzter Bisphenole.

Vorzugsweise werden die Verzweiger im Falle der Herstellung eines Polycarbonats nach dem Phasengrenzflächenverfahren mit den Bisphenolen und den Kettenabbrechern in einer wässrig alkalischen Phase vorgelegt, oder in einem organischen Lösungsmittel gelöst zusammen mit den Kohlensäurederivaten zugegeben. Im Falle des Umesterungsverfahrens werden die Verzweiger bevorzugt zusammen mit den Dihydroxyaromaten oder Bisphenolen dosiert.

Bevorzugt einzusetzende Katalysatoren bei der Herstellung von erfindungsgemäß bevorzugt als Polyester einzusetzender Polycarbonate nach dem Schmelzeumesterungsverfahren sind Ammoniumsalze und Phosphoniumsalze, wie sie beispielsweise in US-A 3 442 864**,** JP-A-14742/72**,** US-A 5 399 659 oder DE-A 19 539 290 beschrieben werden.

Copolycarbonate können in einer bevorzugten Ausführungsform auch als Polyester eingesetzt werden. Copolycarbonate im Sinne der Erfindung sind insbesondere Polydiorganosiloxan-Polycarbonat-Blockcopolymere, deren Gewichtsmittel der molaren Masse M_{w} bevorzugt im Bereich von 10 000 bis 200 000 g/mol, besonders bevorzugt im Bereich von 20 000 bis 80 000 g/mol liegt, ermittelt durch Gelchromatographie gemäß **DIN EN ISO 16014-5:2012-10** nach vorheriger Eichung durch Lichtstreuungsmessung oder Ultrazentrifugation. Der Gehalt an aromatischen Carbonatstruktureinheiten in den Polydiorganosiloxan-Polycarbonat-Blockcopolymeren liegt vorzugsweise im Bereich von 75 bis 97,5 Gew.-%, besonders bevorzugt im Bereich von 85 bis 97 Gew.-%. Der Gehalt an Polydiorganosiloxanstruktureinheiten in den Polydiorganosiloxan-Polycarbonat-Blockcopolymeren liegt vorzugsweise im Bereich von 25 bis 2,5 Gew.-%, besonders bevorzugt im Bereich von 15 bis 3 Gew.-%. Die Polydiorganosiloxan-Polycarbonat-Blockcopolymeren können vorzugsweise ausgehend von α,ω-Bishydroxyaryloxy-endgruppen-haltigen Polydiorganosiloxanen mit einem mittleren Polymerisationsgrad Pₙ im Bereich von 5 bis 100, besonders bevorzugt mit einem mittleren Polymerisationsgrad Pₙ im Bereich von 20 bis 80, hergestellt werden.

Besonders bevorzugt als Polyester einzusetzende Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan (= Bisphenol TMC). Erfindungsgemäß bevorzugt als Polyester einzusetzende Polycarbonate sind beispielsweise unter der Marke Makrolon^{®} bei der Covestro AG, Leverkusen erhältlich.

In einer Ausführungsform können den als Polyester einzusetzenden Polycarbonaten übliche Additive, insbesondere Entformungsmittel, in der Schmelze zugemischt oder auf der Oberfläche aufgebracht werden. Bevorzugt enthalten die als Polyester einzusetzenden Polycarbonate bereits Entformungsmittel vor einer sich anschließenden Compoundierung mit den anderen Komponenten, wobei der Fachmann unter Compoundierung (aus dem Englischen: *Compound =* "Mischung") einen Begriff aus der Kunststofftechnik versteht, welcher mit Kunststoffaufbereitung gleichzusetzen ist und den Veredelungsprozess von Kunststoffen durch Beimischung von Zuschlagstoffen (Füllstoffe, Additive usw.) zur gezielten Optimierung der Eigenschaftsprofile beschreibt. Siehe: **https://de.wikipedia.org/wiki/Compoundierung.** Eine Compoundierung erfolgt vorzugsweise in Extrudern, besonders bevorzugt in gleichläufigen Doppelschneckenextrudern, gegenläufigen Doppelschneckenextrudern, Planetwalzenextrudern oder Ko-Knetern und umfasst die Verfahrensoperationen Fördern, Aufschmelzen, Dispergieren, Mischen, Entgasen und Druckaufbau.

In einer bevorzugten Ausführungsform können als Polyester aber auch Blends von Polycarbonat und Polyalkylenterephthalaten eingesetzt werden, die ebenfalls bei der Covestro AG unter der Marke Makroblend^{®} angeboten werden. Bevorzugt handelt es sich hierbei um PC-PET-Blends, PC-PBT-Blends oder um PC-PCT-G-Blends, wobei PC für Polycarbonat, PET für Polyethylenterephthalat, PBT für Polybutylenterephthalat und PCT für Polycyclohexylendimethylenterephthalat steht.

### b) Flammschutzmittel

Um Brandschutzklassifizierungen wie UL 94 V0 oder GWFI 960°C (Glow Wire Flammability Index) zu erreichen, sind vom wenigstens einen Flammschutzmittel der Komponente b) oftmals nur geringe Dosierungen nötig.

Erfindungsgemäß bevorzugt als Komponente b) einzusetzende Phosphinsäuresalze sind Dialkylphosphinsäuresalze auszuwählen aus der Gruppe Aluminiummethylethylphosphinat Aluminiumtrisdiethylphosphinat, Aluminiumisopropylisobutylphosphinat, Aluminium-isopropyltertbutylphosphinat, Aluminiumdiisobutylphosphinat, Aluminiumtrismethylethylphosphinat, Zinkbisdiethylphosphinat, Zinkbismethylethylphosphinat und Mischungen davon.

Besonders bevorzugt werden Aluminiumtrisdiethylphosphinat oder Zinkbisdiethylphosphinat eingesetzt. Insbesondere bevorzugt ist Aluminiumtrisdiethylphosphinat. Diese zumeist farblosen Flammschutzmittel werden von der Clariant International Ltd, Muttenz, Schweiz unter der Marke Exolit^{®} vertrieben, beispielsweise in reiner Form das Aluminiumtrisdiethylphosphinat (DEPAL) als Exolit^{®} OP1240 oder das Zinkbisdiethylphosphinat als Exolit^{®} OP950. Das im Rahmen der vorliegenden Anmeldung insbesondere bevorzugt als Komponente b) einzusetzende Aluminiumtrisdiethylphosphinat DEPAL wurde erstmalig von der Clariant GmbH, Frankfurt am Main, in WO 99/28327 A1 beschrieben und unter der CAS No. 225789-38-8 und dem Namen "Phosphinic acid, P,P-diethyl-aluminum salt (3:1)" in die Registry-Datenbank aufgenommen.

### c) Flammschutzmittel-Synergist

Die Flammschutzwirkung eines Flammschutzmittels kann durch Verwendung von Synergisten zusätzlich verbessert werden, indem sie die Branddauer oder Nachbrennzeiten verkürzen, oder ein Abtropfen des im Falle von Brandhitze geschmolzenen bzw. brennenden Polymers verhindern. Beispielsweise ist dem Fachmann aus KR 890 004 333 B1 der Einsatz von Antimontrioxid (Sb₂O₃) als Synergist in Kombination mit halogenierten Flammschutzmitteln bekannt.

Erfindungsgemäß wird das Flammschutzmittel der Komponente b) mit c) wenigstens einem Flammschutzmittel-Synergist auszuwählen aus Melaminpolyphosphat (CAS No. 1312753-42-6 bzw. 218768-84-4) oder Aluminiumphosphonat (CAS No. 2278203-39-5) eingesetzt. Melaminpolyphosphat ist als Melapur^{®} 200/70 bei BASF SE, Ludwigshafen, Deutschland erhältlich. Aluminiumphosphonat ist als sek. Aluminiumphosphonat gemäß der Formel Al₂(HPO₃)₃ • (H₂O)_{q} mit q im Bereich von 0 bis 4 nach Beispiel 2 der WO 2013/083247 A1 erhältlich.

Besonders bevorzugt sind die Kombinationen der Komponenten b) und c) in Form von Aluminiumtrisdiethylphosphinat (DEPAL) mit Melaminpolyphosphat und Aluminiumtrisdiethylphosphinat (DEPAL) mit Aluminiumphosphonat.

Im Rahmen der vorliegenden Erfindung wurde zudem gefunden, dass Zinkbisdiethylphosphinat oder Zinkbismethylethylphosphinat nicht notwendigerweise einen Flammschutzmittel-Synergist erfordern. Die vorliegende Erfindung betrifft deshalb in einer bevorzugten Ausführungsform Kunststoffprodukte aus Polymerzusammensetzungen enthaltend a) wenigstens einen Polyester, b) wenigstens ein Flammschutzmittel aus Zinkbisdiethylphosphinat oder Zinkbismethylethylphosphinat und d) als Farbmittel das Isomerengemisch von 9,9'-Oxybis-12H-phthaloperin-12-on, 9,10-Oxybis-12H-phthaloperin-12-on und 10,10'-Oxybis-12H-phthaloperin-12-on.

Als Komponente c) einzusetzende Flammschutzmittel-Synergisten werden in Form fertiger Mischungen mit den Flammschutzmitteln der Komponente b) beispielsweise von der Clariant International Ltd, Muttenz, Schweiz ebenfalls unter der Marke Exolit^{®} vertrieben. Genannt seien hier beispielsweise Exolit^{®} OP1311, Exolit^{®} OP1314, Exolit^{®} OP1316, Exolit^{®} OP1400, Exolit^{®} OP1402, Exolit^{®} OP1466 oder Exolit^{®} OP1260.

### Weitere Komponenten

Der in bevorzugter Ausführungsform als Komponente e) zusätzlich einzusetzende **Füll- oder Verstärkungsstoff** kann auch in Form von Mischungen aus zwei oder mehreren unterschiedlichen Füllstoffen und/oder Verstärkungsstoffen eingesetzt werden.

Vorzugsweise wird wenigstens ein Füll- oder Verstärkungsstoff aus der Gruppe Kohlenstofffasern [CAS Nr. 7440-44-0], Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas) [CAS Nr. 65997-17-3], amorphe Kieselsäure [CAS Nr. 7631-86-9], Quarzmehl [CAS Nr. 14808-60-7], Calciumsilicat [CAS Nr. 1344-95-2], Calciummetasilicat [CAS Nr. 10101-39-0], Magnesiumcarbonat [CAS Nr. 546-93-0], Kaolin [CAS Nr. 1332-58-7], calciniertes Kaolin [CAS Nr. 92704-41-1], Kreide [CAS Nr.1317-65-3], Kyanit [CAS Nr. 1302-76-7], gepulverter oder gemahlener Quarz [CAS Nr. 14808-60-7], Glimmer [CAS Nr. 1318-94-1], Phlogopit [CAS Nr. 12251-00-2], Bariumsulfat [CAS Nr. 7727-43-7], Feldspat [CAS Nr. 68476-25-5], Wollastonit [CAS Nr. 13983-17-0], Montmorillonit [CAS Nr. 67479-91-8], Pseudoböhmit der Formel AIO(OH), Magnesiumcarbonat [CAS Nr. 12125-28-9] und Talkum [CAS Nr. 14807-96-6] eingesetzt.

Unter den faserförmigen Füll- oder Verstärkungsstoffen sind Glasfasern und Wollastonit besonders bevorzugt, wobei Glasfasern ganz besonders bevorzugt sind. Bezüglich der Glasfasern unterscheidet der Fachmann geschnittene Fasern, auch als Kurzfasern bezeichnet, mit einer Länge im Bereich von 0,1 bis 1 mm, Langfasern mit einer Länge im Bereich von 1 bis 50 mm und Endlosfasern mit einer Länge L > 50 mm. Kurzfasern werden vorzugsweise in der Spritzgusstechnik eingesetzt und können direkt mit einem Extruder verarbeitet werden. Langfasern können ebenfalls noch in Extrudern verarbeitet werden. Sie finden im großen Umfang Einsatz beim Faserspritzen. Langfasern werden häufig Duroplasten als Füllstoff zugemischt. Endlosfasern werden als Rovings oder Gewebe in faserverstärkten Kunststoffen eingesetzt. Erzeugnisse mit Endlosfasern erzielen die höchsten Steifigkeits- und Festigkeitswerte. Des Weiteren werden gemahlene Glasfasern angeboten, deren Länge nach der Vermahlung typischerweise im Bereich von 70 bis 200 µm liegt.

Erfindungsgemäß bevorzugt als Füll- oder Verstärkungsstoff einzusetzende Glasfasern sind geschnittene Langglasfasern mit einer mittels Laserbeugungs-Partikelgrößenanalyse (lasergranulometrische Messung bzw. Laserdiffraktometrie) gemäß **ISO 13320** zu bestimmenden mittleren Ausgangslänge im Bereich von 1 bis 50 mm, besonders bevorzugt im Bereich von 1 bis 10 mm, ganz besonders bevorzugt im Bereich von 2 bis 7 mm. Zu Laserbeugungs-Partikelgrößenbestimmung/Laserdiffraktometrie gemäß der Norm **ISO 13320** siehe:
**https://de.wikipedia.org/wiki/Laserbeugungs-Partikelgr%C3%B6%C3%9Fenanalyse** Die Glasfasern können bedingt durch die Verarbeitung zur Formmasse (Compoundierung) oder zum Erzeugnis, insbesondere im Spritzgussprozess, in der Formmasse oder im Erzeugnis einen kleineren d90- bzw. d50-Wert aufweisen, als die ursprünglich eingesetzten Glasfasern. So liegt der arithmetische Mittelwert der Glasfaserlänge nach der Verarbeitung häufig nur noch im Bereich von 150 µm bis 300 µm, weshalb sich die in der vorliegenden Beschreibung genannten Längen-, Breiten- und Durchmesserangaben zu Füll- und Verstärkungsstoffen, insbesondere zu Glasfasern, auf den Zustand vor jeglicher Verarbeitung, insbesondere vor einer Compoundierung oder vor einer Verarbeitung, insbesondere im Spritzguss, beziehen.

Bevorzugte, als Füll- oder Verstärkungsstoff einzusetzende Glasfasern haben einen mittels Laserdiffraktometrie gemäß **ISO 13320** zu bestimmenden mittleren Faserdurchmesser im Bereich von 7 bis 18 µm, besonders bevorzugt im Bereich von 9 bis 15 µm.

Die als Füll- oder Verstärkungsstoff vorzugsweise einzusetzenden Glasfasern werden in einer bevorzugten Ausführungsform mit einem geeigneten Schlichtesystem oder einem Haftvermittler bzw. Haftvermittlersystem ausgerüstet. Bevorzugt wird ein Schlichtesystem bzw. ein Haftvermittler auf Silanbasis eingesetzt.

Vorzugsweise betrifft die Erfindung deshalb Kunststoffprodukte bzw. deren Vorstufe die Polymerzusammensetzungen mit einem nach **DIN 5033 (1979)** zu bestimmenden Farbabstand ΔE <20 von den L*a*b* Koordinaten zu einer mit "2" beginnenden Farbnummer der RAL-Farbtabelle gemäß Farbmodell nach **EN ISO 11664-4** enthaltend a) wenigstens einen Polyester und die oben genannten Komponenten b) das wenigstens eine Flammschutzmittel, c) den wenigstens einen Flammschutzmittel-Synergist, d) das wenigstens eine Farbmittel und e) Glasfasern, vorzugsweise geschnittene Langglasfasern mit einer mittels Laserbeugungs-Partikelgrößenanalyse (lasergranulometrische Messung bzw. Laserdiffraktometrie) nach **ISO 13320** zu bestimmenden mittleren Ausgangslänge im Bereich von 1 bis 50 mm. Vorzugsweise liegt die nach **ISO 13320** zu bestimmende mittlere Ausgangslänge der geschnittenen Langglasfasern im Bereich von 1 bis 10 mm, ganz besonders bevorzugt im Bereich von 2 bis 7 mm.

Vorzugsweise werden in den Polymerzusammensetzungen auf 100 Massenanteile Polyester 1 bis 150 Massenanteile, bevorzugt 5 bis 80 Massenanteile, besonders bevorzugt 10 bis 50 Massenanteile geschnittene Langglasfasern eingesetzt.

Vorzugsweise weisen die geschnittenen Langglasfasern einen mittels Laserdiffraktometrie nach **ISO 13320** zu bestimmenden mittleren Faserdurchmesser im Bereich von 7 bis 18 µm auf, besonders bevorzugt im Bereich von 9 bis 15 µm.

Bevorzugt wird als Polyester wenigstens ein C₂-C₁₀-Polyalkylenterephthalat eingesetzt, insbesondere bevorzugt Polybutylenterephthalat (PBT).

### Additive

Unter der Prämisse des Erhalts einer hohen Lasertransmission enthalten die erfindungsgemäßen Polymerzusammensetzungen oder Kunststoffprodukte in bevorzugter Auführungsform zusätzlich zu den Komponenten a), b), c), d) und e) oder anstelle von e) noch wenigstens ein von den vorgenannten Komponenten verschiedenes f) **Additiv.** Bevorzugt einzusetzende Additive f) sind Antioxidantien, (Thermo)Stabilisatoren, UV-Stabilisatoren, Gammastrahlenstabilisatoren, Komponenten zur Verringerung der Wasseraufnahme bzw. Hydrolysestabilisatoren, Antistatika, Emulgatoren, Nukleierungsmittel, Weichmacher, Verarbeitungshilfsmittel, Schlagzähmodifikatoren, Gleit- und/oder Entformungsmittel, Komponenten zur Verringerung der Wasseraufnahme, Fließhilfsmittel oder Elastomermodifikatoren, kettenverlängernd wirkende Additive, sowie vom Isomerengemisch in Form von 9,9'-Oxybis-12H-phthaloperin-12-on, 9,10-Oxybis-12H-phthaloperin-12-on und 10,10'-Oxybis-12H-phthaloperin-12-on verschiedene Farbmittel. Die Additive können alleine oder in Mischung bzw. in Form von Masterbatchen eingesetzt werden.

Bevorzugte **(Thermo)Stabilisatoren** als Additiv sind sterisch gehinderte Phenole, insbesondere solche enthaltend mindestens eine 2,6-Di-tert.-butylphenyl-Gruppe und/oder 2-tert.-Butyl-6-methylphenyl-Gruppe, ferner Phosphite, Hypophosphite, insbesondere Natriumhypophosphit NaH₂PO₂, Hydrochinone, aromatische sekundäre Amine, substituierte Resorcine, Salicylate, Benzotriazole und Benzophenone, 3,3'-Thiodipropionsäureester sowie verschieden substituierte Vertreter dieser Gruppen oder deren Mischungen. Weitere Stabilisatoren im Sinne der vorliegenden Erfindung sind Zinkoxid, Zinkborat sowie Calcium- oder Zink(hydroxy)stannate. Die als Additiv einzusetzenden (Thermo)Stabilisatoren werden vorzugsweise zu 0,01 bis 5 Massenanteilen, besonders bevorzugt zu 0,05 bis 3 Massenanteilen, jeweils bezogen auf 100 Massenanteile Polyester eingesetzt.

Als Additiv einzusetzende **UV-Stabilisatoren** werden vorzugsweise substituierte Resorcine, Salicylate, Benzotriazole und Benzophenone, HALS-Derivate ("Hindered Amine Light Stabilizers") enthaltend mindestens eine 2,2,6,6-Tetramethyl-4-piperidyl-Einheit oder Benzophenone eingesetzt. Die als Additiv einzusetzenden UV-Stabilisatoren werden vorzugsweise zu 0,01 bis 2 Massenanteilen, besonders bevorzugt zu 0,1 bis 1 Massenanteilen, jeweils bezogen auf 100 Massenanteile Polyester eingesetzt.

Als Additiv einzusetzende und vom Isomerengemisch in Form von 9,9'-Oxybis-12H-phthaloperin-12-on, 9,10-Oxybis-12H-phthaloperin-12-on und 10,10'-Oxybis-12H-phthaloperin-12-on verschiedene **Farbmittel** werden bevorzugt, anorganische Pigmente, insbesondere Ultramarinblau, Bismutvanadat, Eisenoxid, Titandioxid, Zinksulfid, Zinn-Titan-Zinkoxide [CAS Nr. 923954-49-8], weiterhin organische Farbmittel, bevorzugt Phthalocyanine, Chinacridone, Benzimidazole, insbesondere Ni-2-hydroxy-napthyl-benzimidazol [CAS Nr. 42844-93-9] und/oder Pyrimidin-azo-benzimidazol [CAS-Nr. 72102-84-2] und/oder Pigment Yellow 192 [CAS Nr. 56279-27-7], außerdem Perylene, Anthrachinone, 1,3-Dihydro-5,6-bis(((2-hydroxy-1-naphthyl)methylen)amino-2H-benzimidazol-2-onato(2-)-N5,N6,O5,O6)nickel, insbesondere C.I. Solvent Yellow 163 [CAS Nr. 13676-91-0] eingesetzt, wobei diese Aufzählung nicht abschließend ist. In einer Ausführungsform, werden unter Verlust der lasertransmittierenden Eigenschaft für Laser absorbierende Kunststoffprodukte als Farbmittel auch Ruß oder Nigrosin eingesetzt.

Als Additiv einzusetzende **Nukleierungsmittel** werden bevorzugt Natrium- oder Calciumphenylphosphinat, Aluminiumoxid oder Siliziumdioxid sowie ganz besonders bevorzugt Talkum eingesetzt, wobei diese Aufzählung nicht abschließend ist.

Bevorzugt als Additiv einzusetzende **Weichmacher** sind Phthalsäuredioctylester, Phthalsäuredibenzylester, Phthalsäurebutylbenzylester, Kohlenwasserstofföle oder N-(n-Butyl)benzolsulfonamid.

Bevorzugt als Additiv einzusetzende **Elastomermodifikatoren** umfassen u.a. ein oder mehrere Pfropfpolymerisate von

| | |
|---|---|
| E.1 | 5 bis 95 Gew.-%, vorzugsweise 30 bis 90 Gew.-%, wenigstens eines Vinylmonomeren und |
| E.2 | 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt < -20°C, wobei die Gewichtsprozente sich auf 100 Gew.-% Elastomermodifikator beziehen. Die Pfropfgrundlage E.2 hat im allgemeinen eine mittels Laserdiffraktometrie gemäß ISO 13320 zu bestimmende mittlere Teilchengröße d50-Wert von 0,05 bis 10 µm, vorzugsweise 0,1 bis 5 µm, besonders bevorzugt 0,2 bis 1 µm. |

Monomere zu E.1 sind vorzugsweise Gemische aus

| | |
|---|---|
| E.1.1 | 50 bis 99 Gew.-% Vinylaromaten und/oder kernsubstituierten Vinylaromaten, insbesondere Styrol, α-Methylstyrol, p-Methylstyrol, p-Chlorstyrol, und/oder Meth- |
| | acrylsäure-(C₁-C₈)-Alkylester, insbesondere. Methylmethacrylat, Ethylmethacrylat) und |
| E.1.2 | 1 bis 50 Gew.-% Vinylcyanide, insbesondere ungesättigte Nitrile wie Acrylnitril und Methacrylnitril, und/oder (Meth)Acrylsäure-(C₁-C₈)-alkylester, insbesondere Methylmethacrylat, Glycidylmethacrylat, n-Butylacrylat, t-Butylacrylat, und/oder Derivate ,insbesondere Anhydride und Imide ungesättigter Carbonsäuren, insbesondere Maleinsäureanhydrid oder N-Phenyl-Maleinimid, wobei die Gewichtsprozente sich auf 100 Gew.-% Elastomermodifikator beziehen. |

Bevorzugte Monomere E.1.1 sind auszuwählen aus mindestens einem der Monomere Styrol, α-Methylstyrol und Methylmethacrylat, bevorzugte Monomere E.1.2 sind ausgewählt aus mindestens einem der Monomere Acrylnitril, Maleinsäureanhydrid, Glycidylmethacrylat und Methylmethacrylat. Besonders bevorzugte Monomere sind E.1.1 Styrol und E.1.2 Acrylnitril.

Für die in den Elastomermodifikatoren einzusetzenden Pfropfpolymerisate geeignete Pfropfgrundlagen E.2 sind beispielsweise Dienkautschuke, EPDM-Kautschuke, also solche auf Basis Ethylen/Propylen und gegebenenfalls Dien, ferner Acrylat-, Polyurethan-, Silikon-, Chloropren und Ethylen/Vinylacetat-Kautschuke. EPDM steht für Ethylen-Propylen-DienKautschuk.

Bevorzugte Pfropfgrundlagen E.2 sind Dienkautschuke, insbesondere auf Basis Butadien, Isopren etc. oder Gemische von Dienkautschuken oder Copolymerisate von Dienkautschuken oder deren Gemischen mit weiteren copolymerisierbaren Monomeren, insbesondere gemäß E.1.1 und E.1.2, mit der Maßgabe, dass die Glasübergangstemperatur der Komponente E.2 bei <10°C, vorzugsweise bei <0°C, besonders bevorzugt bei <-10°C liegt.

Als Additiv einzusetzende **Gleit- und/oder Entformungsmittel** sind bevorzugt langkettige Fettsäuren, insbesondere Stearinsäure oder Behensäure, deren Salze, insbesondere Ca- oder Zn-Stearat, sowie deren Esterderivate, insbesondere solche auf Basis von Pentaerythritol, insbesondere Fettsäureester des Pentaerythritols oder Amidderivate, insbesondere Ethylen-bis-stearylamid, Montanwachse sowie niedermolekulare Polyethylen- bzw. Polypropylenwachse. Montanwachse im Sinne der vorliegenden Erfindung sind Mischungen aus geradkettigen, gesättigten Carbonsäuren mit Kettenlängen von 28 bis 32 C-Atomen.

### Glasfaserverstärkte Kunststoffprodukte

Vorzugsweise betrifft die Erfindung Kunststoffprodukte bzw. deren Vorstufe die Polymerzusammensetzungen worin zusätzlich zu den Komponenten a), b), c) und d) als Additiv e) Füll- oder Verstärkungsstoff Glasfasern eingesetzt werden, vorzugsweise geschnittene Langglasfasern mit einer mittels Laserbeugungs-Partikelgrößenanalyse (lasergranulometrische Messung bzw. Laserdiffraktometrie) nach **ISO 13320** zu bestimmenden mittleren Ausgangslänge im Bereich von 1 bis 50 mm. Vorzugsweise liegt die nach **ISO 13320** zu bestimmende mittlere Ausgangslänge der geschnittenen Langglasfasern im Bereich von 1 bis 10 mm, ganz besonders bevorzugt im Bereich von 2 bis 7 mm.

Vorzugsweise werden in den Polymerzusammensetzungen auf 100 Massenanteile Polyester 1 bis 150 Massenanteile, bevorzugt 5 bis 80 Massenanteile, besonders bevorzugt 10 bis 50 Massenanteile geschnittene Langglasfasern eingesetzt.

Vorzugsweise weisen die geschnittenen einen mittels Laserdiffraktometrie nach **ISO 13320** zu bestimmenden mittleren Faserdurchmesser im Bereich von 7 bis 18 µm auf, besonders bevorzugt im Bereich von 9 bis 15 µm.

Die Erfindung betrifft besonders bevorzugt Kunststoffprodukte mit einem nach **DIN 5033 (1979)** zu bestimmenden Farbabstand ΔE <20 von den L*a*b* Koordinaten zu einer mit "2" beginnenden Farbnummer der RAL-Farbtabelle gemäß Farbmodell nach **EN ISO 11664-4** basierend auf Polymerzusammensetzungen enthaltend wenigstens einen Polyester, die Komponenten b) und c) sowie ein Farbmittel enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on, vorzugsweise im Verhältnis von 1 : 1 : 0,8 - 1,5 bis 1 : 1,5 : 0,8 - 1,5, insbesondere bevorzugt zusätzlich mit einer nach **ISO 13320** mittels Laserdiffraktometrie zu bestimmenden mittleren Teilchengröße d50 im Bereich von 1 bis 12 µm sowie Glasfasern, vorzugsweise geschnittene Langglasfasern mit einer mittels Laserbeugungs-Partikelgrößenanalyse (lasergranulometrische Messung bzw. Laserdiffraktometrie) nach **ISO 13320** zu bestimmenden mittleren Ausgangslänge im Bereich von 1 bis 50 mm, besonders bevorzugt im Bereich von 1 bis 10 mm, ganz besonders bevorzugt im Bereich von 2 bis 7 mm. Bevorzugt wird als Polyester wenigstens ein Poly-C₂-C₁₀-alkylenterephthalat eingesetzt, insbesondere Polybutylenterephthalat.

Insbesondere ganz besonders bevorzugt liegen in diesen Kunststoffprodukten 1 bis 150 Massenanteile, bevorzugt 5 bis 80 Massenanteile, besonders bevorzugt 10 bis 50 Massenanteile Glasfasern auf 100 Massenanteile des wenigstens einen Polyesters, vorzugsweise des wenigstens einen Poly-C₂-C₁₀-alkylenterephthalats, insbesondere des wenigstens Polybutylenterephthalats vor.

### Verfahren

Die Erfindung betrifft auch ein Verfahren zur Herstellung von Kunststoffprodukten, insbesondere von Kunststoffspritzgussprodukten, indem man
a) wenigstens einen Polyester,
b) wenigstens ein Flammschutzmittel aus wenigstens einem Phosphinsäuresalz der Formel (I) und/oder wenigstens einem Diphosphinsäuresalz der Formel (II) und/oder deren Polymere, 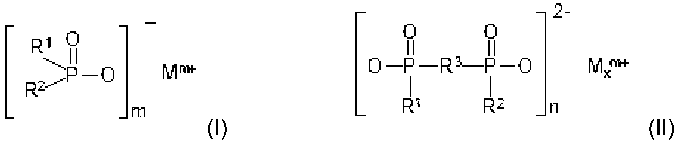 worin
   R¹, R² gleich oder verschieden sind und für ein lineares oder verzweigtes C₁-C₆-Alkyl, und/oder für C₆-C₁₄-Aryl stehen,
   R³ für lineares oder verzweigtes C₁-C₁₀-Alkylen, C₆-C₁₀-Arylen oder für C₁-C₆- Alkyl-C₆-C₁₀-arylen oder C₆-C₁₀-Aryl-C₁-C₆-alkylen steht,
   M für Aluminium oder Zink steht,
   m für eine ganze Zahl von 1 bis 4 steht;
   n für eine ganze Zahl von 1 bis 3 steht,
   x für 1 und 2 steht,
   wobei n, x und m in Formel (II) gleichzeitig nur solche ganzen Zahlen annehmen können, dass das Diphosphinsäuresalz der Formel (II) als Ganzes ungeladen ist,
c) wenigstens einen Flammschutzmittel-Synergist auszuwählen aus Melaminpolyphosphat oder Aluminiumphosphonat und
d) wenigstens ein Farbmittel enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on
zu Polymerzusammensetzungen mischt, zu Strängen austrägt, bis zur Granulierfähigkeit abkühlt, trocknet und granuliert und die Polymerzusammensetzungen anschließend im Spritzguss, einschließlich der Sonderverfahren Gasinjektionstechnik (GIT), Wasserinjektionstechnik (WIT) oder Projektilinjektionstechnik (PIT), in Extrusionsverfahren, einschließlich in der Profil-Extrusion, oder durch Blasformen, weiter verarbeitet.

Vorzugsweise wird im erfindungsgemäßen Verfahren wenigstens ein Flammschutzmittel aus wenigstens einem Phosphinsäuresalz der Formel (I) 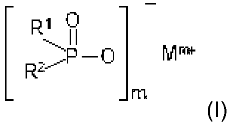 eingesetzt, worin
- R¹, R²: gleich oder verschieden sind und für ein lineares oder verzweigtes C₁-C₆-Alkyl, stehen,
M für Aluminium oder Zink steht und
m für eine ganze Zahl von 1 bis 4 steht.

Vorzugsweise werden im erfindungsgemäßen Verfahren
a) auf 100 Massenanteile des wenigstens einen Polyesters, vorzugsweise des wenigstens einen C₂-C₁₀-Polyalkylenterephthalats oder Polycarbonats,
b) 2 bis 100 Massenanteile, bevorzugt 5 bis 60 Massenanteile, besonders bevorzugt 7 bis 40 Massenanteile, insbesondere bevorzugt 8 bis 30 Massenanteile des wenigstens einen Flammschutzmittels b),
c) 0,2 bis 50 Massenanteile, bevorzugt 0,5 bis 40 Massenanteile, besonders bevorzugt 0,75 bis 35 Massenanteile des wenigstens einen Flammschutzmittel-Synergist c) und
d) 0,01 bis 5 Massenanteile des wenigstens einen Farbmittels enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on eingesetzt.

Vorzugsweise weisen auch die nach dem erfindungsgemäßen Verfahren erhältlichen Kunststoffprodukte einen nach **DIN 5033 (1979)** zu bestimmenden Farbabstand ΔE <10 von den L*a*b* Koordinaten zu einer mit "2" beginnenden Farbnummer der RAL-Farbtabelle gemäß Farbmodell nach **EN ISO 11664-4** auf, besonders bevorzugt einen nach **DIN 5033 (1979)** zu bestimmenden Farbabstand ΔE <5 von den L*a*b* Koordinaten zu einer mit "2" beginnenden Farbnummer der RAL-Farbtabelle gemäß Farbmodell nach **EN ISO 11664-4.**

Insbesondere bevorzugt wird im erfindungsgemäßen Verfahren als Polyester Polybutylenterephthalat eingesetzt.

Ganz besonders bevorzugt betrifft die Erfindung ein Verfahren worin zusätzlich zu den Komponenten a) und b) und c) und d) noch e) Glasfasern mit einer mittels Laserbeugungs-Partikelgrößenanalyse (lasergranulometrische Messung bzw. Laserdiffraktometrie) nach **ISO 13320** zu bestimmenden mittleren Ausgangslänge im Bereich von 1 bis 50 mm, besonders bevorzugt im Bereich von 1 bis 10 mm, ganz besonders bevorzugt im Bereich von 2 bis 7 mm eingesetzt werden.

Vorzugsweise werden im erfindungsgemäßen Verfahren 1 bis 150 Massenanteile, besonders bevorzugt 5 bis 80 Massenanteile, ganz besonders bevorzugt 10 bis 50 Massenanteile Glasfasern auf 100 Massenanteile Polyester eingesetzt.

Insbesondere bevorzugt haben auch im erfindungsgemäßen Verfahren die Glasfasern einen mittels Laserdiffraktometrie nach **ISO 13320** zu bestimmenden mittleren Faserdurchmesser im Bereich von 7 bis 18 µm, besonders bevorzugt im Bereich von 9 bis 15 µm.

Die Erfindung betrifft besonders bevorzugt ein Verfahren zur Herstellung von Kunststoffprodukten in Form lasertransparenter, oranger und flammgeschützter Erzeugnisse oder Fügepartner zur weiteren Verarbeitung beim Laserdurchstrahlschweißen im Wellenlangenbereich von 800 nm bis 1200 nm. Vorzugsweise wird im Rahmen des Laserdurchstrahlschweißens ein Nd:YAG-Laser (1064 nm) oder ein Hochleistungsdiodenlaser (800- 1000 nm) angewandt.

Zur Klarstellung sei angemerkt, dass vom Rahmen der vorliegenden Erfindung alle im Rahmen der Elektromobilitätskomponenten aufgeführten allgemeinen oder in Vorzugsbereichen genannten Definitionen und Parameter in beliebigen Kombinationen von den erfindungsgemäßen Verfahren mit umfasst sind.

### Verwendungen

Vorzugsweise betrifft die Erfindung die Verwendung des Farbmittels enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on zur Herstellung flammgeschützter Kunststoffprodukte wenn diese
a) wenigstens einen Polyester,
b) wenigstens ein Flammschutzmittel aus wenigstens einem Phosphinsäuresalz der Formel (I) und/oder wenigstens einem Diphosphinsäuresalz der Formel (II) und/oder deren Polymere, 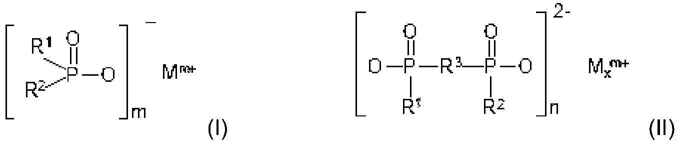 worin
   R¹, R² gleich oder verschieden sind und für ein lineares oder verzweigtes C₁-C₆-Alkyl, und/oder für C₆-C₁₄-Aryl stehen,
   R³ für lineares oder verzweigtes C₁-C₁₀-Alkylen, C₆-C₁₀-Arylen oder für C₁-C₆- Alkyl-C₆-C₁₀-arylen oder C₆-C₁₀-Aryl-C₁-C₆-alkylen steht,
   M für Aluminium oder Zink steht,
   m für eine ganze Zahl von 1 bis 4 steht;
   n für eine ganze Zahl von 1 bis 3 steht,
   x für 1 und 2 steht,
   wobei n, x und m in Formel (II) gleichzeitig nur solche ganzen Zahlen annehmen können, dass das Diphosphinsäuresalz der Formel (II) als Ganzes ungeladen ist,
c) wenigstens einen Flammschutzmittel-Synergist auszuwählen aus Melaminpolyphosphat oder Aluminiumphosphonat enthalten.

Vorzugsweise wird im Rahmen der erfindungsgemäßen Verwendung wenigstens ein Flammschutzmittel aus wenigstens einem Phosphinsäuresalz der Formel (I) 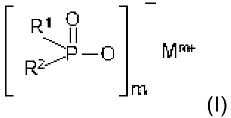 eingesetzt, worin
- R¹, R²: gleich oder verschieden sind und für ein lineares oder verzweigtes C₁-C₆-Alkyl, stehen,
M für Aluminium oder Zink steht und
m für eine ganze Zahl von 1 bis 4 steht.

Auch im Rahmen der erfindungsgemäßen Verwendung werden vorzugsweise auf 100 Massenanteile a) des wenigstens einen Polyesters
2 bis 100 Massenanteile, bevorzugt 5 bis 60 Massenanteile, besonders bevorzugt 7 bis 40 Massenanteile, insbesondere bevorzugt 8 bis 30 Massenanteile b) des wenigstens einen Flammschutzmittels,
0,2 bis 50 Massenanteile, bevorzugt 0,5 bis 40 Massenanteile, besonders bevorzugt 0,75 bis 35 Massenanteile c) des wenigstens einen Flammschutzmittel-Synergist
und 0,01 bis 5 Massenanteile des d) wenigstens einen Farbmittels enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on eingesetzt.

Bevorzugte Polyester sind im Rahmen der erfindungsgemäßen Verwendung C₂-C₁₀-Polyalkylenterephthalate oder Polycarbonate, insbesondere Polybutylenterephthalat.

In bevorzugter Ausführungsform werden auch im Rahmen der erfindungsgemäßen Verwendung zusätzlich zu den Komponenten a) und b) und c) und d) noch e) Glasfasern mit einer mittels Laserbeugungs-Partikelgrößenanalyse (lasergranulometrische Messung bzw. Laserdiffraktometrie) nach ISO 13320 zu bestimmenden mittleren Ausgangslänge im Bereich von 1 bis 50 mm, besonders bevorzugt im Bereich von 1 bis 10 mm, ganz besonders bevorzugt im Bereich von 2 bis 7 mm eingesetzt.

Vorzugsweise werden auch im Rahmen der erfindungsgemäßen Verwendung 1 bis 150 Massenanteile, besonders bevorzugt 5 bis 80 Massenanteile, ganz besonders bevorzugt 10 bis 50 Massenanteile Glasfasern auf 100 Massenanteile Polyester eingesetzt.

Insbesondere bevorzugt haben auch im Rahmen der erfindungsgemäßen Verwendung die Glasfasern einen mittels Laserdiffraktometrie nach ISO 13320 zu bestimmenden mittleren Faserdurchmesser im Bereich von 7 bis 18 µm, besonders bevorzugt im Bereich von 9 bis 15 µm.

Vorzugsweise betrifft die Erfindung die Verwendung eines Farbmittels enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on zur Herstellung von Kunststoffprodukten mit einem nach **DIN 5033 (1979)** zu bestimmenden Farbabstand ΔE <20 von den L*a*b* Koordinaten zu einer mit "2" beginnenden Farbnummer der RAL-Farbtabelle gemäß Farbmodell nach **EN ISO 11664-4** wenn diese a) wenigstens einen Polyester und die oben genannten Komponenten b) das wenigstens eine Flammschutzmittel und c) den wenigstens einen Flammschutzmittel-Synergist enthalten.

Besonders bevorzugt betrifft die Erfindung die Verwendung des Farbmittels in Form des Isomerengemisches von 9,9'-Oxybis-12H-phthaloperin-12-on, 9,10-Oxybis-12H-phthaloperin-12-on und 10,10'-Oxybis-12H-phthaloperin-12-on zur Herstellung von Kunststoffprodukten sowie die zu ihrer Herstellung erforderlichen Polymerzusammensetzungen mit einem nach **DIN 5033 (1979)** zu bestimmenden Farbabstand ΔE <20 von den L*a*b* Koordinaten zu einer mit "2" beginnenden Farbnummer der RAL-Farbtabelle gemäß Farbmodell nach **EN ISO 11664-4** wenn diese a) wenigstens einen Polyester und die oben genannten Komponenten b) das wenigstens eine Flammschutzmittel, c) den wenigstens einen Flammschutzmittel-Synergist und e) Glasfasern enthalten.

Vorzugsweise handelt es sich auch bei der erfindungsgemäßen Verwendung bei den Kunststoffprodukten um Kunststoffspritzgussprodukte. Vorzugsweise handelt es sich bei der Verwendung des Farbmittels enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on in Kunststoffprodukten um lasertransparente, orange, flammgeschützte Erzeugnisse oder Fügepartner, besonders bevorzugt um diese beim Laserdurchstrahlschweißen im Wellenlangenbereich von 800 nm bis 1200 nm einzusetzen. Vorzugsweise wird im Rahmen dieser Verwendung ein Nd:YAG-Laser (1064 nm) oder ein Hochleistungsdiodenlaser (800 - 1000 nm) angewandt.

Zur Klarstellung angemerkt sei, dass vom Rahmen der beanspruchten Verwendung alle im Rahmen der oben genannten Kunststoffprodukte bzw. erfindungsgemäßen Verfahren aufgeführten allgemeinen oder in Vorzugsbereichen genannten Definitionen und Parameter in beliebigen Kombinationen mit umfasst sind.

### Beispiele

Zum Nachweis der erfindungsgemäß beschriebenen Verbesserungen der Eigenschaften wurden zunächst durch Compoundierung entsprechende Polyester basierte Polymerzusammensetzungen angefertigt. Die einzelnen Komponenten wurden hierzu in einem Zweiwellenextruder (Leistritz LSM 30-34der Leistritz AG (Nürnberg, Deutschland)) bei Temperaturen zwischen 270 und 300°C gemischt, als Strang ausgetragen, bis zur Granulierbarkeit abgekühlt und granuliert. Nach dem Trocknen (in der Regel zwei Tage bei 80°C im Vakuumtrockenschrank) erfolgte die Verarbeitung des Granulats im Spritzguss bei Temperaturen im Bereich von 270 bis 290°C zu Normprüfkörpern für die jeweiligen Prüfungen.

### Edukte:

| | |
|---|---|
| Komponente a) | Polybutylenterephthalat (Pocan^{®} B 1300, Envalior Deutschland GmbH, Düsseldorf, Deutschland) |
| Komponente b) & Komponente c) | Exolit^{®} OP 1311 der Clariant International Ltd., Muttenz, Schweiz, enthaltend Aluminiumtrisdiethylphosphinat (CAS No. 225789-38-8) und Melaminpolyphosphat (CAS No. 1312753-42-6) |
| Komponente b) & Komponente c') | Exolit^{®} OP 1400 der Clariant International Ltd., Muttenz, Schweiz, enthaltend Aluminiumtrisdiethylphosphinat (CAS No. 225789-38-8) und Aluminiumphosphonat (CAS No. 2278203-39-5) |
| Komponente d' | Farbmittel gemäß WO 2020 / 187704 A1 bzw. 10,10'-Oxy-bis-12H-phthaloperin-12-on [CAS Nr. 203576-97-0] von Angene International Limited, London |
| Komponente d) | Farbmittel mit einer nach ISO 13320 mittels Laserdiffraktometrie zu bestimmenden mittleren Teilchengröße d50 im Bereich von 5 µm enthaltend die Isomere 9,9'-Oxybis-12H-phthaloperin-12-on, 9,10-Oxybis-12H-phthaloperin-12-on und 10,10'-Oxybis-12H-phthaloperin-12-on im Verhältnis 1 : 1,2 : 1, hergestellt nach folgender Synthesevorschrift: |

### Synthesevorschrift für Komponente d)

### Herstellung des Farbmittels enthaltend die Isomere 9,9'-Oxybis-12H-phthaloperin-12-on, 9,10-Oxybis-12H-phthaloperin-12-on und 10,10'-Oxybis-12H-phthaloperin-12-on im Verhältnis 1 : 1,2 : 1

300 g Phenol wurden bei einer Temperatur von 60°C aufgeschmolzen. Diesem wurden 45 g (285 mmol) 1,8-Diaminonaphthalin und 3.1 g 2,6-Lutidin (28,5 mmol) zugegeben und die Mischung für 30 Minuten gerührt. Anschließend wurden 45 g (145 mmol) 4,4-Oxidiphthalsäureanhydrid eingetragen und die Reaktionsmischung für weitere 30 Minuten gerührt. Danach wurde die Reaktionsmischung auf 175°C aufgeheizt und bei dieser Temperatur für 10 Stunden gehalten und das dabei entstehende Reaktionswasser abdestilliert. Zu der Reaktionsmischung wurden dann bei einer Temperatur von 175°C 295 g Methanol zugegeben und innerhalb einer Stunde die Temperatur der Reaktionsmischung auf 30°C abgekühlt. Das Reaktionsprodukt wurde auf einer Nutsche isoliert und anschließend in 300 g Phenol bei 175°C für 45 Minuten gerührt. Es wurden anschließend bei einer Temperatur von 175°C 295 g Methanol zugegeben und innerhalb von drei Stunden die Temperatur der Reaktionsmischung auf 30°C abgekühlt. Das Reaktionsprodukt wurde auf einer Nutsche isoliert und zunächst mit 440 g Methanol und dann mit 800 g Wasser gewaschen und in einem Vakuumtrockenschrank bei 80°C und 150 mbar getrocknet. Von dem Farbstoff wurde die Isomerenverteilung zu 1 : 1,2 : 1, sowie die mittlere Teilchengröße d50 mit 5 µm bestimmt.

**Tab.2**

| | | Vgl. 1 | Vgl. 2 | Bsp. 1 | Bsp. 2 | Vgl.3 |
|---|---|---|---|---|---|---|
| Komponente a) | Massenanteile | 100 | 100 | 100 | 100 | 100 |
| Komponente b) | Massenanteile | 21,5 | 21,5 | 23 | 25 | 21,5 |
| Komponente c) | Massenanteile | 5,7 | | 5,7 | | 5,7 |
| Komponente c') | Massenanteile | | 10,8 | | 10,5 | |
| Komponente d) | Massenanteile | | | 0,3 | 0,3 | |
| Komponente d') | Massenanteile | | | | | 0,3 |
| Flammschutz | Klasse | V-0 | V-0 | V-0 | V-0 | V-0 |
| Lasertransparenz | Reduzierung der Transparenz | +++ | +++ | +++ | +++ | +++ |
| Schlieren nach Spritzguss | Sichtprüfung | n.d. | n.d. | +++ | +++ | ++ |
| Verbräunung nach Spritzguss | Sichtprüfung durch Vergleich der RAL Farbtöne ΔE<10 | RAL 2001 | RAL 2001 | RAL 2001 | RAL 2001 | RAL 8001 |

Die in der **Tab.2** dargestellten Prüfergebnisse zeigen, dass die erfindungsgemäßen Vielzweckprüfkörper (Bsp. 1 und Bsp. 2) neben der höchsten Brandschutzklassifizierung V-0 eine hervorragende Lasertransparenz (+++) aufwiesen und die Prüfkörper mit Flammschutzmittel, Flammschutzmittel-Synergist und Farbmittel nach dem Spritzguss sowohl schlierenfrei "+++", also auch nicht verbräunt waren. Die Tatsache, dass das erfindungsgemäß als Farbmittel einzusetzende Isomerengemisch im Spritzguss nicht verbräunte, zeigten die mittels Spritzguss erhaltenen Vielzweckprüfkörper mit RAL 2001. Im Falle der Vergleichsbeispiele Vgl.1 und Vgl.2 wurde aufgrund der Flammschutzmittel / Synergist Kombination zwar die Brandschutzklassifizierung V-0 erzielt, jedoch steht n.d. für "nicht bestimmt", weil kein Farbmittel eingesetzt wurde, das entweder im Spritzguss zu Schlieren hätte führen können, oder im Rahmen der Compoundierung oder im Spritzguss temperaturbedingt hätte verbräunen können. Sowohl die erfindungsgemäßen Beispiele, als auch die Vergleichsbeispiele wiesen durchweg einen RAL Farbwert von 2001 mit einem ΔE von <10 auf. Vgl. 3 hingegen entsprach der Zusammensetzung von Vgl. 1 jedoch mit dem Farbmittel d') gemäß WO 2020 / 187704 A1**,** das wenige Schlieren, jedoch eine typische Verbräunung RAL 8001 zeigte.

### Bestimmungsmethoden

Im Rahmen der vorliegenden Erfindung wurde die Isomerenverteilung des Isomerengemisches von 9,9'-Oxybis-12H-phthaloperin-12-on, 9,10-Oxybis-12H-phthaloperin-12-on und 10,10'-Oxybis-12H-phthaloperin-12-on mittels HPLC (high pressure liquid chromatography) bestimmt und kann als Maß für die Farbbrillanz der in **Tab.2** beschriebenen Polymerzusammensetzungen bzw. daraus mittels Spritzguss hergestellter Kunststoffprodukte in Form von 60•40•2 mm³-Platten den C*-Wert nach DIN **EN ISO 11664-4** mit einem d/8° Spektralphotometer in einer koloristischen Messung herangezogen werden (D65 Normlicht, CIE 1976 L*a*b* Colour Space). Die HPLC ist ein Flüssigchromatografie-Verfahren mit der man nicht nur Substanzen trennt, sondern diese auch über Standards identifizieren und quantifizieren (die genaue Konzentration bestimmen) kann. Das Vorhandensein von Farbschlieren ist auf die nach ISO 13320 zu bestimmende mittlere Teilchengröße d50 des in den Polymerzusammensetzungen erfindungsgemäß einzusetzenden Farbmittels zurückzuführen.

Unter einer hohen Lasertransmission gilt erfindungsgemäß eine Lasertransmission von mindestens 30%, bevorzugt mindestens 40%, besonders bevorzugt mindestens 50% gemessen an Probeplättchen einer Dicke von 0,75 mm mit dem Transmissionsmessgerat LPKF TMG3 der Firma LPKF Laser 8 Electronics AG, Garbsen, Deutschland bei einer Laserwellenlange von 980 nm. Die Messungen im Rahmen der vorliegenden Erfindung erfolgten auf Basis der DVS-Richtlinie 2243 (01/2014) "Laserstrahlschweißen thermoplastischer Kunststoffe" anhand von Rundplatten mit 80 mm Durchmesser und 0,75 mm Dicke im nahen Infrarot (NIR).

Das Transmissionsmessgerät LPKF TMG3 der Firma LPKF Laser & Electronics AG wurde vor den Messungen mit einem nach **DIN EN ISO/IEC 17025** erzeugten Messnormal kalibriert. Die Messungen erfolgten im Rahmen der vorliegenden Erfindung bei einer Laserwellenlänge von 980 nm.

Eine Reduzierung der Transmission von < 3% bei 980 nm, im Vergleich zu einer Kunststoffprobe ohne Komponente d) dem Farbmittel enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on, wird im Rahmen der vorliegenden Erfindung mit "+++" bewertet. Eine Reduzierung der Transmission bei 980 nm im Bereich von 3 bis 5 %, im Vergleich zu einer Kunststoffprobe ohne Komponente d) dem Farbmittel enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on, wird im Rahmen der vorliegenden Erfindung mit "++" bewertet. Eine Reduzierung der Transmission bei 980 nm im Bereich von 5 bis 10%, im Vergleich zu einer Kunststoffprobe ohne Komponente d) dem Farbmittel enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on, wird im Rahmen der vorliegenden Erfindung nur noch mit "+" bewertet.

Der Nachweis von Schlieren nach Spritzguss wurde mittels Sichtprüfung bewertet, wobei "+++" schlierenfrei, "++" schlierenreduziert und "-" schlierenenthaltend / bedeutet.

Der Nachweis der Verbräunung durch Spritzguss erfolgte mittels Bestimmung des RAL Farbtons des Spritzgusserzeugnisses in Form von Vielzweckprüfkörper gemäß **DIN EN ISO 527** vom Typ 1A durch den Abgleich mit einer RAL Farbkarte. Die bekanntesten RAL Farbtöne sind im RAL Classic System definiert, welches 213 Farben umfasst. Diese sind durch eine vierstellige Nummer, beginnend mit "RAL", und einem optionalen Farbnamen gekennzeichnet. Eine RAL Farbkarte ist ein physischer Farbfächer, der die verschiedenen RAL Farben zeigt. Der Farbton des Spritzgusserzeugnisses wurde durch visuellen Abgleich mit der Karte ermittelt.

## Patentansprüche

1. Kunststoffprodukte aus Polymerzusammensetzungen enthaltend
a) wenigstens einen Polyester,
b) wenigstens ein Flammschutzmittel aus wenigstens einem Phosphinsäuresalz der Formel (I) und/oder wenigstens einem Diphosphinsäuresalz der Formel (II) und/oder deren Polymere, 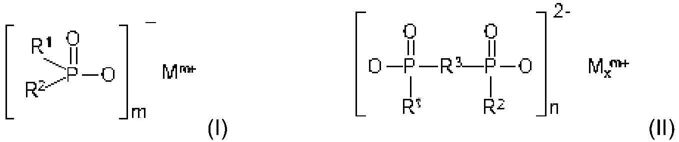 worin
R¹, R² gleich oder verschieden sind und für ein lineares oder verzweigtes C₁-C₆-Alkyl, und/oder für C₆-C₁₄-Aryl stehen,
R³ für lineares oder verzweigtes C₁-C₁₀-Alkylen, C₆-C₁₀-Arylen oder für C₁-C₆- Alkyl-C₆-C₁₀-arylen oder C₆-C₁₀-Aryl-C₁-C₆-alkylen steht,
M für Aluminium oder Zink steht,
m für eine ganze Zahl von 1 bis 4 steht;
n für eine ganze Zahl von 1 bis 3 steht,
x für 1 und 2 steht,
wobei n, x und m in Formel (II) gleichzeitig nur solche ganzen Zahlen annehmen können, dass das Diphosphinsäuresalz der Formel (II) als Ganzes ungeladen ist,
c) wenigstens einen Flammschutzmittel-Synergist auszuwählen aus Melaminpolyphosphat oder Aluminiumphosphonat und
d) wenigstens ein Farbmittel enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on.

2. Kunststoffprodukte gemäß Anspruch 1, **dadurch gekennzeichnet, dass** als Komponente b) wenigstens einem Phosphinsäuresalz der Formel (I) 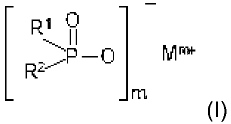 eingesetzt wird, worin
R¹, R² gleich oder verschieden sind und für ein lineares oder verzweigtes C₁-C₆-Alkyl stehen, M für Aluminium oder Zink steht und m für eine ganze Zahl von 1 bis 4 steht.

3. Kunststoffprodukte gemäß Anspruch 1 oder 2, **gekennzeichnet durch** einen nach DIN 5033 (1979) zu bestimmenden Farbabstand ΔE <20 von den L*a*b* Koordinaten zu einer mit "2" beginnenden Farbnummer der RAL-Farbtabelle gemäß Farbmodell nach EN ISO 11664-4..

4. Kunststoffprodukte gemäß einem oder mehreren der Ansprüche 1 bis 3 **dadurch gekennzeichnet, dass** auf 100 Massenanteile a) des wenigstens einen Polyesters
2 bis 100 Massenanteile, bevorzugt 5 bis 60 Massenanteile, besonders bevorzugt 7 bis 40 Massenanteile, insbesondere bevorzugt 8 bis 30 Massenanteile b) des wenigstens einen Flammschutzmittels,
0,2 bis 50 Massenanteile, bevorzugt 0,5 bis 40 Massenanteile, besonders bevorzugt 0,75 bis 35 Massenanteile c) des wenigstens einen Flammschutzmittel-Synergist und
0,01 bis 5 Massenanteile des d) wenigstens einen Farbmittels eingesetzt werden.

5. Kunststoffprodukte gemäß einem oder mehreren der Ansprüche 1 bis 4 **dadurch gekennzeichnet, dass** Komponente b) Phosphinsäuresalze Dialkylphosphinsäuresalze auszuwählen aus der Gruppe Aluminiummethylethylphosphinat Aluminiumtrisdiethylphosphinat, Aluminiumisopropylisobutylphosphinat, Aluminium-isopropyltertbutylphosphinat, Aluminiumdiisobutylphosphinat, Aluminiumtrismethylethylphosphinat, Zinkbisdiethylphosphinat, Zinkbismethylethylphosphinat und Mischungen davon sind.

6. Kunststoffprodukte gemäß einem oder mehreren der Ansprüche 1 bis 4 **dadurch gekennzeichnet, dass** als Komponente b) Aluminiumtrisdiethylphosphinat eingesetzt wird.

7. Kunststoffprodukte gemäß einem oder mehreren der Ansprüche 3 bis 6 **gekennzeichnet durch** einen Farbton der im RAL-Farbsystem der Farbnummer RAL2001, RAL2003, RAL2004, RAL2007, RAL2008, RAL2009, RAL2010 oder RAL2011.

8. Kunststoffprodukte gemäß einem oder mehreren der Ansprüche 1 bis 7 **dadurch gekennzeichnet, dass** diese noch e) wenigstens einen Füll und/oder Verstärkungsstoff, vorzugsweise zu 1 bis 150 Massenanteilen bezogen auf 100 Massenanteile Polyester, enthalten.

9. Kunststoffprodukte gemäß Anspruch 8 **dadurch gekennzeichnet, dass** der Füll und/oder Verstärkungsstoff aus der Gruppe Kohlenstofffasern, Voll- oder Hohlglaskugeln, Glasfasern, gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AIO(OH), Magnesiumcarbonat und Talkum ausgewählt wird.

10. Kunststoffprodukte gemäß Anspruch 9 **dadurch gekennzeichnet, dass** als Füll und/oder Verstärkungsstoff Glasfasern mit einer mittels Laserbeugungs-Partikelgrößenanalyse gemäß ISO 13320 zu bestimmenden mittleren Ausgangslänge im Bereich von 1 bis 50 mm eingesetzt werden.

11. Kunststoffprodukte gemäß einem oder mehreren der Ansprüche 3 bis 10 **dadurch gekennzeichnet, dass** es sich um lasertransparente, orange, flammgeschützte Erzeugnisse oder Fügepartner handelt, insbesondere Bauteile für den Elektroantrieb von Kraftfahrzeugen.

12. Verfahren zur Herstellung von Kunststoffprodukten, vorzugsweise mit einem nach DIN 5033 (1979) zu bestimmenden Farbabstand ΔE <20 von den L*a*b* Koordinaten zu einer mit "2" beginnenden Farbnummer der RAL-Farbtabelle gemäß Farbmodell nach EN ISO 11664-4, indem man
a) wenigstens einen Polyester,
b) wenigstens ein Flammschutzmittel aus wenigstens einem Phosphinsäuresalz der Formel (I) und/oder wenigstens einem Diphosphinsäuresalz der Formel (II) und/oder deren Polymere, 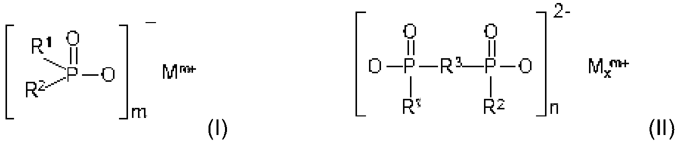 worin
R¹, R² gleich oder verschieden sind und für ein lineares oder verzweigtes C₁-C₆-Alkyl, und/oder für C₆-C₁₄-Aryl stehen,
R³ für lineares oder verzweigtes C₁-C₁₀-Alkylen, C₆-C₁₀-Arylen oder für C₁-C₆- Alkyl-C₆-C₁₀-arylen oder C₆-C₁₀-Aryl-C₁-C₆-alkylen steht,
M für Aluminium oder Zink steht,
m für eine ganze Zahl von 1 bis 4 steht;
n für eine ganze Zahl von 1 bis 3 steht,
x für 1 und 2 steht,
wobei n, x und m in Formel (II) gleichzeitig nur solche ganzen Zahlen annehmen können, dass das Diphosphinsäuresalz der Formel (II) als Ganzes ungeladen ist,
c) wenigstens einen Flammschutzmittel-Synergist auszuwählen aus Melaminpolyphosphat oder Aluminiumphosphonat und
d) wenigstens ein Farbmittel enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on
zu Polymerzusammensetzungen mischt, zu Strängen austrägt, bis zur Granulierfähigkeit abkühlt, trocknet und granuliert und die Polymerzusammensetzungen anschließend im Spritzguss, einschließlich der Sonderverfahren Gasinjektionstechnik, Wasserinjektionstechnik oder Projektilinjektionstechnik, in Extrusionsverfahren, einschließlich in der Profil-Extrusion, oder durch Blasformen, weiter verarbeitet.

13. Verfahren gemäß Anspruch 12, **dadurch gekennzeichnet, dass** auf
a) 100 Massenanteile des wenigstens einen Polyesters, vorzugsweise C₂-C₁₀-Polybutylenalkylenterephthalat oder Polycarbonat, insbesondere Polybutylenterephthalat,
b) 2 bis 100 Massenanteile, bevorzugt 5 bis 60 Massenanteile, besonders bevorzugt 7 bis 40 Massenanteile, insbesondere bevorzugt 8 bis 30 Massenanteile des wenigstens einen Flammschutzmittels b),
c) 0,2 bis 50 Massenanteile, bevorzugt 0,5 bis 40 Massenanteile, besonders bevorzugt 0,75 bis 35 Massenanteile des wenigstens einen Flammschutzmittel-Synergist c) und
d) 0,01 bis 5 Massenanteile des wenigstens einen Farbmittels eingesetzt werden.

14. Verwendung des Farbmittels enthaltend das Isomerengemisch 9,9'-Oxybis-12H-phthaloperin-12-on, 9,10-Oxybis-12H-phthaloperin-12-on und 10,10'-Oxybis-12H-phthaloperin-12-on zur Herstellung flammgeschützter Kunststoffprodukte, vorzugsweise mit einem Farbabstand ΔE <20 von den L*a*b* Koordinaten zu einer mit "2" beginnenden Farbnummer der RAL-Farbtabelle, wenn diese
a) wenigstens einen Polyester,
b) wenigstens ein Flammschutzmittel aus wenigstens einem Phosphinsäuresalz der Formel (I) und/oder wenigstens einem Diphosphinsäuresalz der Formel (II) und/oder deren Polymere, 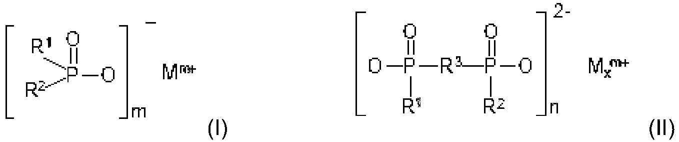 worin
R¹, R² gleich oder verschieden sind und für ein lineares oder verzweigtes C₁-C₆-Alkyl, und/oder für C₆-C₁₄-Aryl stehen,
R³ für lineares oder verzweigtes C₁-C₁₀-Alkylen, C₆-C₁₀-Arylen oder für C₁-C₆- Alkyl-C₆-C₁₀-arylen oder C₆-C₁₀-Aryl-C₁-C₆-alkylen steht,
M für Aluminium oder Zink steht,
m für eine ganze Zahl von 1 bis 4 steht;
n für eine ganze Zahl von 1 bis 3 steht,
x für 1 und 2 steht,
wobei n, x und m in Formel (II) gleichzeitig nur solche ganzen Zahlen annehmen können, dass das Diphosphinsäuresalz der Formel (II) als Ganzes ungeladen ist, und
c) wenigstens einen Flammschutzmittel-Synergist auszuwählen aus Melaminpolyphosphat oder Aluminiumphosphonat enthalten.

15. Verwendung gemäß Anspruch 14, **dadurch gekennzeichnet, dass** auf 100 Massenanteile a) des wenigstens einen Polyesters, vorzugsweise C₂-C₁₀-Polybutylenalkylenterephthalats oder Polycarbonats, insbesondere Polybutylenterephthalats
2 bis 100 Massenanteile, bevorzugt 5 bis 60 Massenanteile, besonders bevorzugt 7 bis 40 Massenanteile, insbesondere bevorzugt 8 bis 30 Massenanteile b) des wenigstens einen Flammschutzmittels,
0,2 bis 50 Massenanteile, bevorzugt 0,5 bis 40 Massenanteile, besonders bevorzugt 0,75 bis 35 Massenanteile c) des wenigstens einen Flammschutzmittel-Synergist
und 0,01 bis 5 Massenanteile des d) wenigstens einen Farbmittels eingesetzt werden.
